(19) Europäisches Patentamt
European Patent Office
Office européen des brevets

(11) EP 2 806 293 B1

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **14169070.1**

(22) Anmeldetag: **20.05.2014**

(51) Internationale Patentklassifikation (IPC):
***G02B 1/111*** *(2015.01)*

(52) Gemeinsame Patentklassifikation (CPC):
**G02B 1/111**

(54) **Nass-chemisches Antireflexions- und Antifog-Beschichtungsverfahren mit verbesserter Prozessfähigkeit**

Wet chemical method for forming an anti-reflective and anti-fogging coating with improved processing capability

Procédé chimique en solution de formation d’un revêtement anti-buée et anti-réfléchissant avec une processabilité améliorée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2013 DE 102013209480**

(43) Veröffentlichungstag der Anmeldung:
**26.11.2014 Patentblatt 2014/48**

(73) Patentinhaber: **Carl Zeiss Vision International GmbH**
**73430 Aalen (DE)**

(72) Erfinder:
- **Hugenberg, Norbert**
  **73434 Aalen (DE)**
- **Von Blanckenhagen, Bernhard**
  **73433 Aalen (DE)**
- **Faul, Silvia**
  **73434 Aalen (DE)**
- **Petereit, Anja**
  **73453 Abtsgmünd (DE)**
- **Peng, Bin**
  **73434 Aalen (DE)**
- **Kraus, Stefan**
  **73434 Aalen (DE)**

(74) Vertreter: **Maiwald GmbH**
**Elisenhof**
**Elisenstraße 3**
**80335 München (DE)**

(56) Entgegenhaltungen:
**EP-A2- 0 903 217** **EP-A2- 2 538 246**
**WO-A1-2009/001723** **US-A1- 2009 011 255**
**US-A1- 2012 019 767**

- **"Silwet* Copolymers Chameleon Solutions", , 28. Oktober 2014 (2014-10-28), XP055149518, Gefunden im Internet: URL:http://www.vanmeeuwenchemicals.com/do w nloads/files/SILWET brochure 2012-1.pdf [gefunden am 2014-10-28]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 806 293 B1

## Beschreibung

Die vorliegende Erfindung betrifft ein Verfahren zur Herstellung eines mehrschichtigen optischen Elements sowie ein durch dieses Verfahren erhältliches optisches Element.

Es gibt unterschiedliche Ansätze, wie Antifog-Eigenschaften (d.h. Antibeschlagseigenschaften) bei optischen Elementen wie z.B. Brillengläsern erreicht werden können. Typischerweise sind dies Sprays oder mit Flüssigkeiten getränkte Tücher. Die zum Einsatz kommenden Flüssigkeiten enthalten üblicherweise Tenside. Ein dadurch bewirkter Antifog-Effekt ist nicht dauerhaft, so dass die Flüssigkeit wiederholt auf die Oberfläche aufgetragen werden muss.

US 2012/0019767 A1 beschreibt ein optisches Element, auf dem ein Flüssigkeitsfilm zur Bereitstellung einer temporären Antifog-Wirkung vorliegt.

Es ist bekannt, dass optische Elemente eine oder mehrere Schichten aufweisen können, mit denen die Lichtreflexion des Substrats modifiziert wird. Um die Reflexion von Oberflächen optischer Elemente wie Linsen, Objektiven oder Prismen zu unterdrücken und die Transmission zu erhöhen, ist es bekannt, AntireflexBeschichtungen (auch als AR-Beschichtungen bezeichnet) einzusetzen. Diese AR-Beschichtungen können grundsätzlich einschichtig oder auch mehrschichtig ausgestaltet sein. Bei mehrschichtigen AR-Systemen können z.B. hoch- und niedrigbrechende Schichten in alternierender Reihenfolge verwendet werden. Alternativ ist es auch möglich, dass solche Mehrschichtsysteme mit hoch- und niedrigbrechenden Schichten in alternierender Reihenfolge einen Spiegel-Effekt bewirken.

WO 2012/013739 und WO 2012/013740 beschreiben mehrschichtige Strukturen mit Antireflexionswirkung und permanenter Antifog-Wirkung.

Optische Oberflächen, insbesondere bei der Verwendung von Kunststoffgläsern, sind häufig kratzempfindlich. Daher ist bekannt, solche optischen Oberflächen mit einer sogenannten Hartschicht zu schützen.

US 2009/011255 A1 offenbart ein Verfahren zur Herstellung eines mehrschichtigen optischen Elements, umfassend eine Antireflexionsschicht aus einem Organosilan und einem Epoxidharz und einer darauf aufgebrachten, wasserabweisenden Schutzschicht.

Eine Aufgabe der vorliegenden Erfindung besteht darin, ein Verfahren bereit zu stellen, mit dem in möglichst effizienter Weise ein beschichtetes optisches Element erhältlich ist, dessen Reflexionseigenschaften gezielt eingestellt werden können (z.B. gute Antireflexionseigenschaften)und das sowohl eine gute permanente Antifog-Wirkung wie auch eine hohe Kratzfestigkeit aufweist. Weiterhin ist wünschenswert, dass die Schichten untereinander eine gute Haftfestigkeit und hohe Wärmebeständigkeit aufweisen. Eine weitere Aufgabe der vorliegenden Erfindung besteht in der Bereitstellung eines beschichteten optischen Elements, das den oben genannten Anforderungen gerecht wird.

Die Erfindung ist in den unabhängigen Patentansprüchen angegeben. Bevorzugte Ausführungsformen sind in den abhängigen Patentansprüchen angegeben.

Beschrieben wird ein erstes Verfahren zur Herstellung eines mehrschichtigen optischen Elements, umfassend

(i) ein Aufbringen einer flüssigen Zusammensetzung $C_{HC-1}$ durch Schleuderbeschichtung oder Tauch-Schleuderbeschichtung auf ein Substrat zur Ausbildung einer Hartschicht HC-1 mit einem Brechungsindex $n_{HC-1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird; und/oder ein Hydrolyse- und/oder Kondensationsprodukt des funktionellen Organosilans,
  und eine thermische Behandlung und/oder UV-Behandlung während und/oder nach dem Aufbringen der flüssigen Zusammensetzung $C_{HC-1}$, um ein Vernetzung der hydrolysierbaren funktionellen Organosilanmoleküle zu bewirken,

(ii) nach Schritt (i) das Aufbringen einer flüssigen Zusammensetzung $C_{R-LI-1}$ durch Schleuderbeschichtung oder Tauch-Schleuderbeschichtung zur Ausbildung mindestens einer die Lichtreflexion des Substrats modifizierenden Schicht R-LI-1 mit einem Brechungsindex $n_{R-LI-1}$, wobei $n_{R-LI-1}<n_{HC-1}$,
die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird;
  und/oder ein Hydrolyse- und/oder Kondensationsprodukt des funktionellen Organosilans,
- ein partikelförmiges anorganisches Material, das aus einem anorganischen Oxid mit porösen oder hohlen Partikeln, einem Oxyfluorid oder einem Fluorid ausgewählt wird,
  und eine thermische Behandlung und/oder UV-Behandlung während und/oder nach dem Aufbringen der flüssigen Zusammensetzung $C_{R-LI-1}$, um eine Vernetzung der hydrolysierbaren funktionellen Organosilanmoleküle zu bewirken,

(iii) nach Schritt (ii) das Aufbringen einer flüssigen Zusammensetzung $C_{AF-1}$ durch eine Schleuderbeschichtung oder Tauch-Schleuderbeschichtung zur Ausbildung einer hydrophilen Antifog-Beschichtung AF-1, die flüssige Zusammensetzung $C_{AF-1}$ zumindest eine der folgenden hydrophilen Komponenten (a) und (b) oder ein Gemisch von (a) und (b) umfassend:

(a) ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
sowie ein hydrophiles Polymer; und/oder
(b) ein hydrolysierbares hydrophiles Organosilan, das zumindest einen an das Si-Atom gebundenen organischen Rest mit mindestens einer hydrophilen Gruppe aufweist, und/oder ein Hydrolyse- und/oder Kondensationsprodukt des hydrophilen Organosilans,

(iv) nach Schritt (iii) eine thermische Behandlung und/oder UV-Behandlung der aufgebrachten Schichten, wobei die hydrophile Antifog-Beschichtung AF-1 die äußerste Schicht des optischen Elements darstellt.

Zur Verstärkung der Antifog-Wirkung kann es bevorzugt sein, dass auch die flüssige Zusammensetzung $C_{R-LI-1}$, aus der die Schicht R-LI-1 gebildet wird, eine hydrophile Verbindung enthält. Bevorzugt handelt es sich bei der hydrophilen Verbindung um ein hydrophiles Polymer, ein hydrolysierbares hydrophiles Organosilan oder ein Gemisch davon. Als geeignete hydrophile Polymere können beispielsweise Poly(N-isopropylacrylamid), Polyacrylamid, Poly(2-oxazolin), Polyethylenimin, Polyacrylsäure, Polyacrylat, Polymethacrylat, Poly(ethylenglykol), Poly(propylenglykol), Polyvinylalkohol, Polyvinylpyrrolidon, Polystyrolsulfonat, Polyvinylsulfonsäure, Polymere bzw. Copolymere des Maleinsäureanhydrids und Polymethylvinylether genannt werden. Diese Polymere können in Form von Homopolymeren oder auch als Copolymere vorliegen. Bei der hydrophilen Gruppe, die in dem hydrolysierbaren hydrophilen Organosilan vorliegt, handelt es sich bevorzugt um Polyvinylpyrrolidon, Polyoxyalkylen (z.B. Polyethoxy oder Polypropxy), Poly(meth)acrylat, Sulfonsäure oder ein Salz davon und Sulfonsäureester.
Handelt es sich bei der hydrophilen Gruppe des Organosilans um eine Polyethoxy- oder Polypropoxy-Gruppe, kann diese linear oder verzweigt sein und enthält bevorzugt 2-30 Ethoxy- oder Propxy-Einheiten. Beispielhaft können in diesem Zusammenhang folgende hydrolysierbare hydrophile Organosilane genannt werden: 2-[Methoxy(Polyethylenoxy[ 6-9])propyl]-trimethoxysilan, 2-[Methoxy(Polyethylenoxy[9-11 ])propyl]-trimethoxysilan, 2-[Methoxy(Polyethylenoxy[11-13])propyl]-trimethoxysilan, 2-[Methoxy(Polyethyleneoxy[13-15])propyl]-trimethoxysilan, Bis-propyl-trimethoxysilan Polyethylenoxid[6-9]).
Optional kann die hydrophile Komponente (b) neben dem hydrolysierbaren hydrophilen Organosilan auch noch das hydrolysierbare funktionelle Organosilan umfassen.
Weiterhin beschrieben wird ein zweites Verfahren zur Herstellung eines mehrschichtigen optischen Elements, umfassend

(i) das Aufbringen einer flüssigen Zusammensetzung $C_{HC-1}$ durch Schleuderbeschichtung oder Tauch-Schleuderbeschichtung auf einem Substrat zur Ausbildung einer Hartschicht HC-1 mit einem Brechungsindex $n_{HC-1}$,

die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,

und eine thermische Behandlung und/oder UV-Behandlung während und/oder nach dem Aufbringen der flüssigen Zusammensetzung $C_{HC-1}$, um eine Vernetzung der hydrolysierbaren funktionellen Organosilanmoleküle zu bewirken,

(ii) nach Schritt (i) das Aufbringen zumindest einer flüssigen Zusammensetzung $C_{R-LI-1}$ durch Schleuderbeschichtung oder Tauch-Schleuderbeschichtung zur Ausbildung mindestens einer die Lichtreflexion des Substrats modifizierenden Schicht R-LI-1 mit einem Brechungsindex $n_{R-LI-1}$, wobei

$$n_{R-LI-1} < n_{HC-1},$$

die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges anorganisches Material, das aus einem anorganischen Oxid mit porösen oder hohlen Partikeln, einem Oxyfluorid oder einem Fluorid ausgewählt wird,

und optional das Aufbringen zumindest einer flüssigen Zusammensetzung $C_{R-HI-1}$ durch Schleuderbeschichtung oder Tauch-Schleuderbeschichtung zur Ausbildung einer die Lichtreflexion des Substrats modifizierenden Schicht R-HI-1 mit einem Brechungsindex $n_{R-HI-1}$, wobei $n_{R-HI-1} > n_{HC-1} > n_{R-LI-1}$ ist, die flüssige Zusammensetzung $C_{R-HI-1}$ umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges hochbrechendes Metalloxid, das bevorzugt aus $TiO_2$, $SnO_2$, $ZrO_2$, $Sb_2O_5$, $Sb_2O_3$, $SiO_2$ oder Gemischen oder Core-Shell-Strukturen davon ausgewählt wird,

wobei zumindest eine der flüssigen Zusammensetzung $C_{R-LI-1}$ und/oder zumindest eine der optionalen flüssigen Zusammensetzung $C_{R-HI-1}$ eine hydrophile Verbindung enthält, die aus einem hydrophilen Polymer, einem hydrolysierbaren hydrophilen Organosilan oder einem Gemisch davon ausgewählt wird;
und eine thermische Behandlung und/oder UV-Behandlung während und/oder nach dem Aufbringen der flüssigen Zusammensetzung $C_{R-LI-1}$ und optional dem Aufbringen der flüssigen Zusammensetzung $C_{R-HI-1}$, um eine Vernetzung der hydrolysierbaren funktionellen Organosilanmoleküle zu bewirken;

(iii) nach Schritt (ii) eine thermische Behandlung und/oder UV-Behandlung der aufgebrachten Schichten.

Da gemäß des zweiten, vorhergehend beschriebenen Verfahrens bereits mindestens eine der die Lichtreflexion modifizierenden Schichten eine hydrophile Komponente enthält, ist das Aufbringen einer separaten Antifog-Schicht nicht mehr erforderlich. Zur Verstärkung des Antifog-Effekts kann es allerdings bevorzugt sein, nach Schritt (ii) und vor Schritt (iii) eine flüssige Zusammensetzung $C_{AF-1}$ durch eine Schleuderbeschichtung oder Tauch-Schleuderbeschichtung zur Ausbildung einer hydrophilen Antifog-Beschichtung AF-1 aufzubringen, die flüssige Zusammensetzung $C_{AF-1}$ zumindest eine der folgenden hydrophilen Komponenten (a) und (b) oder ein Gemisch von (a) und (b) umfassend:

(a) ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
sowie ein hydrophiles Polymer; und/oder
(b) ein hydrolysierbares hydrophiles Organosilan, das zumindest einen an das Si-Atom gebundenen organischen Rest mit mindestens einer hydrophilen Gruppe aufweist, und/oder ein Hydrolyse- und/oder Kondensationsprodukt des hydrophilen Organosilans,

Bezüglich geeigneter hydrophiler Polymere in der hydrophilen Komponente (a) und geeigneter hydrophiler Organosilane (hydrophile Komponente (b)) kann auf die oben gemachten Ausführungen verwiesen werden.
Optional kann die hydrophile Komponente (b) neben dem hydrolysierbaren hydrophilen Organosilan auch noch das hydrolysierbare funktionelle Organosilan umfassen.
Sofern nicht gesondert angemerkt, gelten die nachfolgenden Ausführungen sowohl für das erste, vorhergehend beschriebene Verfahrenwie auch für das zweite, vorhergehend beschriebene Verfahren.
Es wurde festgestellt, dass ein mehrschichtiges optisches Element, welches sowohl eine gute Antifog-Wirkung wie auch hohe Kratzfestigkeit aufweist und eine gezielte Modifizierung der Reflexionseigenschaften des Substrats (z.B. in Form einer Antireflex(AR)- Wirkung) ermöglicht, in einem effizienten nass-chemischen Verfahren hergestellt werden

kann, wenn alle funktionellen Schichten (d.h. die Hartschicht, die die Lichtreflexion modifizierende(n) Schicht(en) und die Antifog-Schicht) aus den oben definierten Organosilanen gebildet werden und dadurch auf einer einheitlichen, miteinander kompatiblen chemischen Basis beruhen. Die durchgängige Anwendung der Schleuder- oder Tauchschleuderbeschichtung im beschriebenen Verfahren für die Abscheidung der funktionellen Schichten führt zu einer wesentlichen Vereinfachung des Herstellungsverfahrens solcher beschichteten optischen Elemente.

Aufgrund der einheitlichen, miteinander kompatiblen chemischen Basis der aufgebrachten Beschichtungszusammensetzungen ergeben sich sehr gute Haftungseigenschaften zwischen benachbarten Schichten. Weiterhin wird eine hohe Wärmebeständigkeit des Schichtpakets erreicht, während Stress induzierte Beschichtungsdefekte reduziert werden.

In einer bevorzugten Ausführungsform werden daher alle Schichten in dem beschriebenen Verfahren durch eine Schleuder- oder Tauch-Schleuderbeschichtung auf dem Substrat aufgebracht.

Bevorzugt enthält jede der aufgebrachten Schichten das oben definierte (und nachfolgend noch eingehender beschriebene) hydrolysierbare funktionelle Organosilan und/oder das oben definierte (und nachfolgend noch eingehender beschriebene) hydrolysierbare hydrophile Organosilan.

Bei dem optischen Element handelt es sich bevorzugt um eine Sehhilfe.

Als geeignete optische Elemente können z.B. um Brillengläser, Ferngläser, Lupenbrillen Abdeckscheiben bzw. Abdeckgläser, Linsen wie Okkularlinsen, Kameralinsen oder Frontlinsen, oder Strahlteilerkomponenten genannt werden.

Bei dem Substrat, auf das die Schichten in dem beschriebenen Verfahren aufgebracht werden, kann es sich beispielsweise um ein optisches Glas aus Kunststoff oder anorganischem Glas handeln. Ein solches Kunststoffglas kann z.B. einen oder mehrere der folgenden Kunststoffe aufweisen: Polycarbonat, Poly(methyl)methacrylat, Polyurethane, Polyamide, Polydiethylenglykol-bis-allyl carbonat (CR39), Polythiourethane wie z.B. MR-6, MR-7, MR-8, MR-10, MR-174. Es ist auch möglich, dass das Substrat bereits eine sogenannte Primer-Schicht oder haftvermittelnde Schicht aufweist, um die Haftfestigkeit der Hartschicht HC-1 auf dem Substrat zu verbessern. Bei einer solchen Primer-Schicht kann es sich beispielsweise um eine Polyurethan-Schicht handeln. Im Fall von photochromen Gläsern ist es auch möglich, dass das Substrat bereits eine Polymerschicht (z.B. eine Acrylharz-Schicht) mit Farbstoffen, optional in Kombination mit der Primer-Schicht, aufweist.

Wie oben erläutert, wird in Schritt (i) des beschriebenen Verfahrens eine flüssige Zusammensetzung $C_{HC-1}$ durch Schleuderbeschichtung oder Tauch-Schleuderbeschichtung auf einem Substrat zur Ausbildung einer Hartschicht HC-1 mit einem Brechungsindex $n_{HC-1}$ aufgebracht. Das Aufbringen einer solchen Hartschicht verbessert die Kratzfestigkeit des optischen Elements. Eine Hartbeschichtung ist daher im Allgemeinen eine Beschichtung, die härter ist als das Material des Substrats (z.B. des Kunststoffglases).

Die flüssige Zusammensetzung $C_{HC-1}$ umfasst ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans.

Der Begriff "Organosilan" wird in Übereinstimmung mit dem allgemeinen Fachwissen verwendet und bezeichnet daher eine Silanverbindung mit mindestens einem organischen Rest, der über ein C-Atom an das Si-Atom gebunden ist. Dieser organische Rest enthält zumindest eine der oben genannten funktionellen Gruppen. Organosilane, deren organische Reste funktionelle Gruppen aufweisen, werden auch als "organo-funktionelle Silane" bezeichnet. Über diese Gruppen können die Organosilanmoleküle untereinander oder mit weiteren optionalen Komponenten (z.B. Epoxidharz und/oder (Meth)acrylharz) der flüssigen Zusammensetzung $C_{HC-1}$ vernetzt werden. Wie dem Fachmann bekannt ist, können solche Vernetzungsreaktionen der oben genannten funktionellen Gruppen thermisch oder durch UV-Strahlung initiiert werden.

Wie dem Fachmann allgemein bekannt ist, weisen hydrolysierbare Organosilane neben den organischen Resten, die über ein C-Atom mit dem Si-Atom verbunden sind, auch solche Reste auf, die sich unter Einwirkung von Wasser (und gegebenenfalls Säure oder Base) hydrolytisch vom Si-Atom abspalten lassen.

In einer bevorzugten Ausführungsform weist daher das hydrolysierbare funktionelle Organosilan zumindest einen an das Si-Atom gebundenen und hydrolytisch abspaltbaren Rest auf, der aus Alkoxy (bevorzugt $C_{1-4}$-Alkoxy wie z.B. Methoxy, Ethoxy oder Propoxy), Acyloxy (z.B. Acetoxy), Cycloalkyloxy, Aryloxy, Acylalkylenoxy, Arylalkylenoxy, Halogen, oder Kombinationen davon ausgewählt wird.

Solche hydrolysierbaren funktionellen Organosilane sind dem Fachmann grundsätzlich bekannt und kommerziell erhältlich bzw. durch dem Fachmann geläufige Syntheseverfahren herstellbar.

Durch den Begriff "Hydrolyse- und/oder Kondensationsprodukt" wird zum Ausdruck gebracht, dass es auch möglich ist, dass das hydrolysierbare funktionelle Organosilan zumindest teilweise unter Ausbildung von Silanolgruppen bereits hydrolysiert wurde und außerdem bereits in gewissem Umfang Kondensationsreaktionen zwischen diesen Silanolgruppen stattgefunden haben.

In einer bevorzugten Ausführungsform handelt es sich bei dem hydrolysierbaren funktionellen Organosilan um ein Organosilan der folgenden Formel (I):

$R^6R^7_{3-n}Si(OR^5)_n$ (I)

worin

- $R^5$ eine unsubstituierte oder substituierte Alkyl-, Acyl-, Alkylenacyl-, Cycloalkyl-, Aryl- oder Alkylenarylgruppe ist,
- $R^6$ ein organischer Rest ist, der mindestens eine funktionelle Gruppe aufweist, wobei die funktionelle Gruppe aus Epoxy, Acryl, Methacryl, Acryloxy, Methacryloxy, Allyl oder Vinyl ausgewählt wird,
- $R^7$ eine unsubstituierte oder substituierte Alkyl-, Cycloalkyl-, Aryl- oder Alkylenarylgruppe ist,
- n 2 oder 3 ist,

und/oder ein Hydrolyse- und/oder Kondensationsprodukt des Organosilans (I).

Wenn $R^5$ und/oder $R^7$ eine Alkylgruppe ist/sind, handelt es sich bevorzugt um eine $C_{1-8}$-Alkylgruppe, bevorzugter eine $C_{1-4}$-Alkylgruppe, die gegebenenfalls noch substituiert sein kann. Beispielhaft können in diesem Zusammenhang Methyl, Ethyl, *n*-Propyl, *iso*-Propyl, *n*-Butyl, *iso*-Butyl, *tert.-Butyl,* Hexyl oder auch Octyl genannt werden.

Wenn $R^5$ und/oder $R^7$ eine Acylgruppe ist/sind, so handelt es sich bevorzugt um Acetyl, Propionyl oder Butyryl.

Wenn $R^5$ und/oder $R^7$ eine Alkylenacylgruppe ist/sind, handelt es sich bevorzugt um eine $C_{1-6}$-Alkylen-Acylgruppe (z.B. $-CH_2$-Acyl; $-CH_2-CH_2$-Acyl; etc.) wobei die Acyleinheit bevorzugt Acetyl, Propionyl oder Butyryl ist.

Unter einer Alkylen-Gruppe wird eine zweiwertige Alkylgruppe verstanden (also z.B. $-CH_2-$; $-CH_2-CH_2-$; etc.).

Wenn $R^5$ und/oder $R^7$ eine Cycloalkylgruppe ist/sind, handelt es sich bevorzugt um einen Cyclohexyl-Rest, der gegebenenfalls substituiert sein kann.

Wenn $R^5$ und/oder $R^7$ eine Arylgruppe ist/sind, handelt es sich bevorzugt um einen Phenylrest, der gegebenenfalls substituiert sein kann.

Wenn $R^5$ und/oder $R^7$ eine Alkylenarylgruppe ist/sind, handelt es sich bevorzugt um einen $C_{1-6}$-Alkylen-Arylrest (z.B. $-CH_2$-Aryl; $-CH_2-CH_2$-Aryl; etc.), wobei die Aryleinheit bevorzugt Phenyl ist, das gegebenenfalls substituiert sein kann.

Es wird unter Acryl folgende Gruppe verstanden:

$CH_2=CH-C(O)-$

Es wird unter Methacryl folgende Gruppe verstanden:

$CH_2=C(CH_3)-C(O)-$

Es wird unter Acryloxy folgende Gruppe verstanden:

$CH_2=CH-C(O)-O-$

Es wird unter Methacryloxy folgende Gruppe verstanden:

$CH_2=C(CH_3)-C(O)-O-$

Eine bevorzugte Epoxy-Gruppe ist Glycidoxy.

Die oben genannten funktionellen Gruppen können direkt mit dem Si-Atom verbunden sein. Alternativ ist es auch möglich, dass die funktionellen Gruppen über einen Spacer mit dem Si-Atom verbunden sind. Geeignete Spacergruppen sind z.B. $C_{1-8}$Alkylen, eine Arylengruppe (beispielsweise Phenylen) oder eine

$C_{1-8}$Alkylenethergruppe.

Handelt es sich bei der funktionellen Gruppe um eine Epoxy-Gruppe, weist der Rest $R^6$ bevorzugt folgende Formel (II) auf

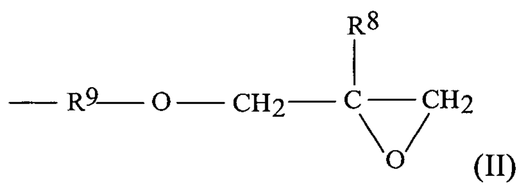

(II)

worin

$R^8$ Wasserstoff oder $C_{1-4}$-Alkyl, bevorzugt Wasserstoff, ist und
$R^9$ eine unsubstituierte oder substituierte $C_{1-10}$-Alkylen-Gruppe, bevorzugter eine unsubstituierte oder substituierte $C_{1-4}$-Alkylen-Gruppe ist.

Bevorzugte hydrolysierbare Organosilane mit Epoxy als funktioneller Gruppe sind z.B. 3-Glycidoxymethyltrimethoxysilan, 3-Glycidoxypropyltrihydroxysilan, 3-Glycidoxypropyldimethylhydroxysilan, 3-Glycidoxypropyldimethylethoxysilan, 3-Glycidoxypropylmethyldiethoxysilan, 3-Glycidoxypropyltrimethoxysilan, 3-Glycidoxypropyltriethoxysilan, 3-Glycidoxypropyldimethoxymethylsilan, 3-Glycidoxypropyldiethoxymethylsilan, 2-(3,4-epoxycyclohexyl)ethyltrimethoxysilan, und entsprechende Derivate.

Handelt es sich bei der funktionellen Gruppe um Acryloxy oder Methacryloxy, kann der Rest $R^6$ beispielsweise folgende Struktur aufweisen:

$$-C_{1-8}Alkylen-O-C(O)-CH=CH_2$$

bzw.

$$-C_{1-8}Alkylen-O-C(O)-C(CH_3)=CH_2$$

Bevorzugte hydrolysierbare Organosilane mit (Meth)acryloxy als funktioneller Gruppe sind z.B. 3-(Meth)acryloxymethyltrimethoxysilan,

3-(Meth)acryloxypropyltrihydroxysilan,
3-(Meth)acryloxypropyldimethylhydroxysilan,
3-(Meth)acryloxypropyldimethylethoxysilan,
3-(Meth)acryloxypropylmethyldiethoxysilan,
3-(Meth)acryloxypropyltrimethoxysilan, 3-(Meth)acryloxypropyltriethoxysilan,
3-(Meth)acryloxypropyldimethoxymethylsilan,
3-(Meth)acryloxypropyldiethoxymethylsilan, und entsprechende Derivate.

Zur Einstellung einer für die Schleuderbeschichtung oder Tauch-Schleuderbeschichtung geeigneten Viskosität kann es bevorzugt sein, wenn die Zusammensetzung $C_{HC-1}$ ein Lösungsmittel enthält. Geeignete Lösungsmittel, mit denen funktionelle Organosilane in einem Schleuderprozess oder Tauch-Schleuderprozess auf ein Substrat aufgebracht werden können, sind dem Fachmann grundsätzlich bekannt.

Ein geeignetes Lösungsmittel kann beispielsweise aus einem Alkohol, Ether oder Ester oder deren Gemischen ausgewählt werden. Bevorzugt enthält das Lösungsmittel zusätzlich zu den oben genannten organischen Lösungsmitteln noch Wasser.

Enthält das Lösungsmittel einen Alkohol, wird dieser bevorzugt aus einem Alkanol, Cycloalkanol, Arylalkohol, Alkylenglycol, Monoalkylether von Polyoxyalkylenglycolen oder Monoalkylether von Alkylenglycolen oder deren Gemischen ausgewählt.

In einer bevorzugten Ausführungsform wird der Alkohol aus einem $C_{1-6}$-Alkanol, bevorzugter einem $C_{1-4}$-Alkanol, einem Mono-$C_{1-4}$-Alkylether eines $C_{2-4}$-Alkylenglycols, oder einem Gemisch davon ausgewählt.

Enthält das Lösungsmittel einen Ether, wird dieser bevorzugt aus einem Dialkylether, einem cycloaliphatischen Ether, einem Arylether oder Alkylarylether oder deren Gemischen ausgewählt.

Enthält das Lösungsmittel einen Ester, wird dieser bevorzugt aus einem Alkylester, Cycloalkylester, Arylalkylester, Alkylenglycolester oder deren Gemischen ausgewählt.

Zur weiteren Verbesserung der Kratzfestigkeit kann die flüssige Zusammensetzung $C_{HC-1}$ optional noch

- eine Silanverbindung der Formel (III)

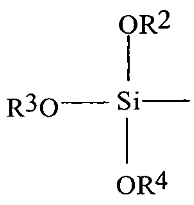

(III)

worin

$R^1$, $R^2$, $R^3$ und $R^4$, die gleich oder unterschiedlich sein können, ausgewählt werden aus Alkyl, Acyl, Alkylenacyl, Cycloalkyl, Aryl oder Alkylenaryl, die gegebenenfalls substituiert sein können, und/oder ein Hydrolyse- und/oder Kondensationsprodukt des Silanderivats (III),

- und/oder ein partikelförmiges anorganisches Oxid, Fluorid oder Oxyfluorid enthalten.

Wenn $R^1$, $R^2$, $R^3$ und/oder $R^4$ in der Silanverbindung eine Alkylgruppe ist/sind, handelt es sich bevorzugt um eine $C_{1-8}$-Alkylgruppe, bevorzugter eine $C_{1-4}$-Alkylgruppe, die gegebenenfalls noch substituiert sein kann. Beispielhaft können in diesem Zusammenhang Methyl, Ethyl, *n*-Propyl, *iso*-Propyl, *n*-Butyl, *iso*-Butyl, *tert.*-Butyl, Hexyl oder auch Octyl genannt werden.

Wenn $R^1$, $R^2$, $R^3$ und/oder $R^4$ in der Silanverbindung eine Acylgruppe ist/sind, so handelt es sich bevorzugt um Acetyl, Propionyl oder Butyryl.

Wenn $R^1$, $R^2$, $R^3$ und/oder $R^4$ in der Silanverbindung eine Alkylenacylgruppe ist/sind, handelt es sich bevorzugt um eine $C_{1-6}$-Alkylen-Acylgruppe (z.B. $-CH_2$-Acyl; $-CH_2-CH_2$-Acyl; etc.) wobei die Acyleinheit bevorzugt Acetyl, Propionyl oder Butyryl ist. Unter einer Alkylen-Gruppe wird eine zweiwertige Alkylgruppe verstanden (also z.B. $-CH_2-$; $-CH_2-CH_2-$; etc.).

Wenn $R^1$, $R^2$, $R^3$ und/oder $R^4$ in der Silanverbindung eine Cycloalkylgruppe ist/sind, handelt es sich bevorzugt um einen Cyclohexyl-Rest, der gegebenenfalls substituiert sein kann.

Wenn $R^1$, $R^2$, $R^3$ und/oder $R^4$ in der Silanverbindung eine Arylgruppe ist/sind, handelt es sich bevorzugt um einen Phenylrest, der gegebenenfalls substituiert sein kann.

Wenn $R^1$, $R^2$, $R^3$ und/oder $R^4$ in der Silanverbindung eine Alkylenarylgruppe ist/sind, handelt es sich bevorzugt um einen $C_{1-6}$-Alkylen-Arylrest (z.B. $-CH_2$-Aryl; $-CH_2-CH_2$-Aryl; etc.), wobei die Aryleinheit bevorzugt Phenyl ist, das gegebenenfalls substituiert sein kann.

Bevorzugte Silanverbindungen der Formel (III) sind z.B. Tetramethoxysilan, Tetraethoxysilan, Tetrapropoxysilan, Tetraisopropoxysilan, Tetrabutoxysilan, Tetraisobutoxysilan, Tetrakis(methoxyethoxy)silan, Tetrakis(methoxypropoxy)silan, Tetrakis(ethoxyethoxy)silan, Tetrakis(methoxyethoxyethoxy)silan, Trimethoxyethoxysilan, Dimethoxydiethoxysilan und entsprechende Derivate.

Diese Silanverbindungen der Formel (III) sind dem Fachmann allgemein bekannt und sind kommerziell erhältlich und/oder durch dem Fachmann bekannte Standardverfahren herstellbar.

Das optional in der Zusammensetzung $C_{HC-1}$ vorliegende partikelförmige anorganische Oxid, Fluorid oder Oxyfluorid kann durch Einbau in das bestehende Netzwerk zur Erhöhung der Kratzfestigkeit beitragen. Weiterhin kann durch Auswahl geeigneter Oxide, Fluoride oder Oxyfluoride die Brechzahl der Beschichtung der Brechzahl des Substrats angepasst werden.

In einer bevorzugten Ausführungsform wird das anorganische Oxid aus $SiO_2$, $TiO_2$, $ZrO_2$, $SnO_2$, $Sb_2O_3$, $Sb_2O_5$, $Al_2O_3$, AlO(OH) oder Mischoxiden oder Gemischen oder Core-Shell-Strukturen davon ausgewählt. Als Fluorid kann beispielsweise $MgF_2$ als reine Komponente oder in Core-Shell-Struktur mit einem der oben genannten Oxide eingesetzt werden.

Der mittlere Partikeldurchmesser der anorganischen Komponente sollte bevorzugt so gewählt sein, dass die Transparenz der Beschichtung nicht beeinflusst wird. In einer bevorzugten Ausführungsform weist die partikelförmige anorganische Komponente einen mittleren Partikeldurchmesser im Bereich von 2 nm bis 150 nm, noch bevorzugter von 2 nm bis 70 nm auf. Der mittlere Partikeldurchmesser wird über dynamische Lichtstreuung gemessen.

Optional kann die Zusammensetzung $C_{HC-1}$ noch eine hydrophile Verbindung enthalten, bevorzugt ein hydrophiles Polymer oder ein hydrolysierbares hydrophiles Organosilan oder ein Gemisch davon.

Diese hydrophile Verbindung wird nachfolgend im Zusammenhang mit der Zusammensetzung $C_{AR-LI-1}$ noch eingehender beschrieben werden.

Optional kann die Zusammensetzung $C_{HC-1}$ noch ein (Meth)acrylharz, oder ein Epoxidharz oder ein Gemisch davon enthalten.

Zur besseren Vernetzung der funktionellen Organosilanmoleküle untereinander oder mit weiteren optionalen Komponenten kann die Zusammensetzung $C_{HC-1}$ noch geeignete Katalysatoren enthalten. Solche Katalysatoren, mit denen die thermisch oder UV-initiierte Vernetzung unterstützt werden kann, sind dem Fachmann grundsätzlich bekannt.

Die flüssige Zusammensetzung $C_{HC-1}$ wird durch Schleuderbeschichtung oder Tauch-Schleuderbeschichtung auf das Substrat aufgebracht.

Der Begriff "Schleuderbeschichtung" wird in seiner üblichen, dem Fachmann geläufigen Bedeutung verstanden und bezeichnet daher eine Methode zur Beschichtung, bei der ein flüssiges Beschichtungsmaterial auf ein rotierendes Substrat aufgebracht (z.B. aufgetropft) wird. Das Beschichtungsmaterial verteilt sich auf dem Substrat. Während des Abdampfens des Lösungsmittels bildet sich eine dünne Schicht mit weitgehend homogener Schichtdicke.

Der Begriff "Tauch-Schleuderbeschichtung" wird in seiner üblichen, dem Fachmann geläufigen Bedeutung verstanden und bezeichnet daher eine Methode zur Beschichtung, bei der das zu beschichtende Substrat in ein Bad des flüssigen Beschichtungsmaterials eingetaucht und nach dem Herausnehmen aus dem Bad überflüssiges Material

durch Rotation des Substrats abgeschleudert wird. Das Beschichtungsmaterial verteilt sich auf dem Substrat. Während des Abdampfens des Lösungsmittels bildet sich eine dünne Schicht mit weitgehend homogener Schichtdicke.

Wie oben erwähnt, wird während und/oder nach dem Aufbringen der flüssigen Zusammensetzung $C_{HC-1}$ eine thermische Behandlung und/oder UV-Behandlung durchgeführt, um eine Vernetzung der hydrolysierbaren funktionellen Organosilanmoleküle zu bewirken.

Die thermische Behandlung und/oder UV-Behandlung kann so durchgeführt werden, dass bereits in Schritt (i) eine vollständige oder im Wesentlichen vollständige Vernetzung der funktionellen Organosilanmoleküle erreicht wird.

Alternativ kann es auch bevorzugt sein, die thermische Behandlung und/oder UV-Behandlung so durchzuführen, dass in Schritt (i) eine erste, aber noch unvollständige Vernetzung der hydrolysierbaren funktionellen Organosilanmoleküle erfolgt.

Dies bewirkt, dass zwischen den Organosilanmolekülen und gegebenenfalls optionalen Komponenten der flüssigen Zusammensetzung $C_{HC-1}$ bereits eine gewisse dreidimensionale Vernetzung und damit eine ausreichende Vorhärtung der Schicht realisiert wird, so dass auf dieser Schicht anschließend weitere Schichten abgeschieden werden können.

Der Vernetzungsgrad kann mit bekannten analytischen Verfahren überprüft werden.

Ein geeigneter Temperaturbereich für die thermische Behandlung ist beispielsweise 40°C - 120°C, bevorzugter 60°C-100°C. In diesem Temperaturbereich können die funktionellen Gruppen der Organosilanmoleküle (z.B. die Epoxygruppen) miteinander reagieren und somit eine dreidimensionale Vernetzung in der Hartschicht bewirken.

Sofern die Vernetzung der funktionellen Gruppen der Organosilanmoleküle durch UV-Behandlung bzw. UV-Bestrahlung bewirkt wird (z.B. bei (Meth)acryl oder (Meth)acryloxy), sind dem Fachmann geeignete Wellenlängenbereiche grundsätzlich bekannt. Die UV-Behandlung kann beispielsweise mit einer Wellenlänge im Bereich von 100 nm - 380 nm erfolgen.

Bei einer noch unvollständigen Vernetzung in Schritt (i) erfolgt die abschließende Aushärtung der Hartschicht HC-1 bevorzugt erst, nachdem alle weiteren Schichten abgeschieden wurden. Bevorzugt werden also alle abgeschiedenen Schichten gemeinsam (d.h. zeitgleich) einer abschließenden Aushärtung durch thermische Behandlung und/oder UV-Behandlung unterzogen. Neben einer verbesserten Prozesseffizienz führt dies auch zu einer verbesserten Haftungsfestigkeit benachbarter Schichten.

Die durch das beschriebene Verfahren erhaltene Hartschicht HC-1 (also nach Durchführung der abschließenden thermischen Behandlung in Schritt (iv) gemäß des ersten, vorhergehend beschriebenen Verfahrens bzw. in Schritt (iii) gemäß des zweiten, vorhergehend beschriebenen Verfahrens) weist einen Brechungsindex $n_{HC-1}$ auf.

Bevorzugt wird dieser Brechungsindex der Hartschicht HC-1 so gewählt, dass er dem Brechungsindex des Substrats entspricht oder zumindest möglichst wenig davon abweicht. Geeignete Mittel bzw. Maßnahmen zur Einstellung des Brechungsindex einer abgeschiedenen Schicht wie z.B. der oben beschriebenen Hartschicht sind dem Fachmann grundsätzlich bekannt. Beispielsweise kann durch Zugabe geeigneter hochbrechender Metalloxidpartikel (z.B. partikelförmiges $TiO_2$, $SnO_2$, $ZrO_2$, $Sb_2O_5$ und/oder $Sb_2O_3$) der Brechungsindex $n_{HC-1}$ der Hartschicht HC-1 zu höheren Werten verschoben werden.

Wenn das Substrat ein optisches Glas aus Kunststoff umfasst, weist die Hartschicht HC-1 bevorzugt einen Brechungsindex $n_{HC-1}$ im Bereich von 1,45-1,80, bevorzugter 1,50-1,70 auf.

Der Brechungsindex der Hartschicht HC-1 (sowie aller weiteren Schichten, die im Rahmen des beschriebenen Verfahrens aufgebracht werden) kann über gängige, dem Fachmann bekannte Verfahren bestimmt werden. Beispielsweise wird der Brechungsindex bestimmt, indem eine Reflexionsmessung mit einem Interferenzspektrometer durchgeführt wird und über ein Simulationsprogramm (beispielsweise von OptiLayer®) eine Reflexkurve angepasst wird. Dabei stellt der Brechungsindex eine Optimierungsvariable dar.

Es ist möglich, dass Schritt (i) lediglich das Aufbringen der Zusammensetzung $C_{HC-1}$, jedoch nicht das Aufbringen weiterer Beschichtungszusammensetzungen beinhaltet. Alternativ ist es jedoch möglich, dass Schritt (i) zwei oder mehr Teilschritte umfasst, wobei in den weiteren Teilschritten weitere Zusammensetzungen $C_{HC-2}$, $C_{HC-3}$, ... zur Ausbildung weiterer Hartschichten aufgebracht werden. Sofern solche zusätzlichen Zusammensetzungen in Schritt (i) aufgebracht werden, geschieht dies bevorzugt ebenfalls durch Schleuderbeschichtung oder Tauch-Schleuderbeschichtung.

Wie oben erwähnt, erfolgt in Schritt (ii) das Aufbringen zumindest einer flüssigen Zusammensetzung $C_{R-LI-1}$ durch Schleuderbeschichtung oder Tauch-Schleuderbeschichtung zur Ausbildung mindestens einer die Reflexion modifizierenden Schicht R-LI-1 mit einem Brechungsindex $n_{R-LI-1}$, wobei der Brechungsindex dieser Schicht R-LI-1 geringer ist als der Brechungsindex der oben beschriebenen Hartschicht HS-1 (d.h. $n_{R-LI-1} < n_{HC-1}$).

In dem ersten, vorhergehend beschriebenen Verfahren enthält die flüssige Zusammensetzung $C_{R-LI-1}$

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt

des funktionellen Organosilans,

- ein partikelförmiges anorganisches Material, das aus einem anorganischen Oxid mit porösen oder hohlen Partikeln, einem Oxyfluorid oder einem Fluorid ausgewählt wird.

In dem zweiten, vorhergehend beschriebenen Verfahren enthält mindestens eine der die Lichtreflexion modifizierenden Schichten, also z.B. die Schicht R-LI-1 mit niedrigem Brechungsindex oder, sofern vorhanden, die Schicht R-HI-1 mit hohem Brechungsindex, eine hydrophile Verbindung.

Bevorzugt handelt es sich bei der hydrophilen Verbindung um ein hydrophiles Polymer, ein hydrolysierbares hydrophiles Organosilan oder ein Gemisch davon. Als geeignete hydrophile Polymere können beispielsweise Poly(N-isopropylacrylamid), Polyacrylamid, Poly(2-oxazolin), Polyethylenimin, Polyacrylsäure, Polyacrylat, Polymethacrylat, Poly(ethylenglykol), Poly(propylenglykol), Polyvinylalkohol, Polyvinylpyrrolidon, Polystyrolsulfonat, Polyvinylsulfonsäure, Polymere bzw. Copolymere des Maleinsäureanhydrids und Polymethylvinylether genannt werden. Diese Polymere können in Form von Homopolymeren oder auch als Copolymere vorliegen. Bei der hydrophilen Gruppe, die in dem hydrolysierbaren hydrophilen Organosilan vorliegt, handelt es sich bevorzugt um Polyvinylpyrrolidon, Polyoxyalkylen (z.B. Polyethoxy oder Polypropxy), Poly(meth)acrylat, Sulfonsäure oder ein Salz davon und Sulfonsäureester.

Handelt es sich bei der hydrophilen Gruppe des Organosilans um eine Polyethoxy- oder Polypropoxy-Gruppe, kann diese linear oder verzweigt sein und enthält bevorzugt 2-30 Ethoxy- oder Propxy-Einheiten. Beispielhaft können in diesem Zusammenhang folgende hydrolysierbare hydrophile Organosilane genannt werden:

2-[Methoxy(Polyethylenoxy[ 6-9])propyl]-trimethoxysilan,
2-[Methoxy(Polyethylenoxy[9-11 ])propyl]-trimethoxysilan,
2-[Methoxy(Polyethylenoxy[11-13])propyl]-trimethoxysilan,
2-[Methoxy(Polyethyleneoxy[13-15])propyl]-trimethoxysilan,
Bis-propyl-trimethoxysilan Polyethylenoxid[6-9]).

Wie nachfolgend noch eingehender beschrieben wird, erfolgt in dem ersten, vorhergehend beschriebenen Verfahren noch die Abscheidung einer hydrophilen Antifog-Schicht AF-1.

Da in dem zweiten, vorhergehend beschriebenen Verfahren zumindest eine der die Lichtreflexion modifizierenden Schichten bereits eine hydrophile Komponente enthält, ist die Abscheidung einer separaten Antifog-Schicht nicht mehr notwendig. Bevorzugt liegt die hydrophile Verbindung zumindest in der die Lichtreflexion modifizierenden Schicht vor, die vom Substrat aus betrachtet die äußerste Schicht des optischen Elements darstellt. In diesem Fall weist diese äußerste Schicht zumindest zwei Funktionen auf, nämlich die Modifizierung des Reflexionsverhaltens des Substrats sowie die Bereitstellung einer Antifog-Wirkung.

Hinsichtlich des hydrolysierbaren funktionellen Organosilans der Zusammensetzung $C_{R\text{-}LI\text{-}1}$ kann auf die obigen, bei der Beschreibung der Zusammensetzung $C_{HC\text{-}1}$ gemachten Ausführungen verwiesen werden.

Es ist möglich, dass das in der Zusammensetzung $C_{HC\text{-}1}$ vorliegende funktionelle Organosilan dem in der Zusammensetzung $C_{R\text{-}LI\text{-}1}$ vorliegenden funktionellen Organosilan entspricht. Alternativ ist es auch möglich, dass sich diese hydrolysierbaren funktionellen Organosilane unterscheiden, beispielsweise in der funktionellen Gruppe des an das Si-Atom gebundenen organischen Rests.

In einer bevorzugten Ausführungsform weisen die in den Zusammensetzungen $C_{HC\text{-}1}$ und $C_{R\text{-}LI\text{-}1}$ vorliegenden hydrolysierbaren funktionellen Organosilane die gleiche funktionelle Gruppe in dem an das Si-Atom gebundenen organischen Rest auf (beispielsweise jeweils (Meth)acryloxy oder Epoxy als funktionelle Gruppe). Zur Einstellung einer geeigneten Viskosität kann die Zusammensetzung $C_{R\text{-}LI\text{-}1}$ ein Lösungsmittel enthalten. Hinsichtlich geeigneter Lösungsmittel kann auf die obigen, bei der Beschreibung der Zusammensetzung $C_{HC\text{-}1}$ gemachten Ausführungen verwiesen werden.

Die durch das beschriebene Verfahren erhaltene Schicht R-LI-1 (also nach Durchführung der abschließenden thermischen oder UV-Behandlung in Schritt (iv) gemäß des ersten, vorhergehend beschriebenen Verfahrens bzw. in Schritt (iii) gemäß des zweiten, vorhergehend beschriebenen Verfahrens) weist einen Brechungsindex $n_{R\text{-}LI\text{-}1}$ auf.

Sofern das mehrschichtige optische Element nur eine die Lichtreflexion des Substrats modifizierende Schicht (d.h. die Schicht R-LI-1) aufweist, fungiert diese Schicht bevorzugt als Antireflexschicht. Sofern das mehrschichtige optische Element noch zusätzliche die Reflexion des Substrats modifizierende Schichten aufweist, kann dieses Schichtpaket als Antireflexbeschichtung oder alternativ auch als Beschichtung mit Spiegeleffekt fungieren.

In einer bevorzugten Ausführungsform handelt es sich bei den die Lichtreflexion des Substrats modifizierenden Schichten um Antireflexschichten, die zusammen eine Antireflexbeschichtung darstellen.

Wie dem Fachmann allgemein bekannt ist, handelt es sich bei einer AntireflexSchicht oder Antireflex-Beschichtung um eine Schicht oder Beschichtung, die die reflexionsvermindernden Eigenschaften des optischen Elements (z.B. des Brillenglases) verbessert und zu einer Reduzierung der Lichtreflexion an der Grenzfläche zwischen dem Brillenglas und Luft über einen relativ großen Teil des sichtbaren Spektrums führt.

Zur Erzielung einer Antireflexionswirkung ist es erforderlich, dass der Brechungsindex der Schicht R-LI-1 geringer ist als der Brechungsindex der oben beschriebenen Hartschicht HS-1 (d.h. $n_{R-LI-1}<n_{HC-1}$).

Wenn das Substrat ein optisches Glas aus Kunststoff umfasst, weist die Antireflexschicht R-LI-1 bevorzugt einen Brechungsindex $n_{R-LI-1}$ im Bereich von 1,20-1,40 auf.

Daher enthält die Zusammensetzung $C_{R-LI-1}$ ein niedrigbrechendes partikelförmiges anorganisches Material, mit dem sich der Brechungsindex der Schicht zu niedrigeren Werten verschieben lässt. Dieses niedrigbrechende partikelförmige anorganische Material wird aus einem anorganischen Oxid mit porösen oder hohlen Partikeln, einem Oxyfluorid oder einem Fluorid oder Gemischen davon ausgewählt.

Bei dem Oxid, das poröse und/oder hohle Partikel aufweist, kann es sich beispielsweise um $SiO_2$ handeln. Durch die Anwesenheit von Luft in den Poren bzw. den Hohlräumen resultiert ein niedriger Brechwert. Durch die Regulierung der Porosität oder des Anteils an Hohlräumen in den Partikeln kann der erwünschte Brechungsindex der Schicht R-LI-1 eingestellt werden. Dies ist dem Fachmann grundsätzlich bekannt.

Die Herstellung solcher Oxide mit porösen oder hohlen Partikeln erfolgt über Verfahren, die dem Fachmann grundsätzlich bekannt sind. Solche Materialien sind auch kommerziell erhältlich.

Oxyfluoride und Fluoride können an sich einen niedrigen Brechungsindex aufweisen und sind daher als Komponente einer niedrigbrechenden Antireflexschicht geeignet. Beispielhaft kann in diesem Zusammenhang Magnesiumoxyfluorid oder Magnesiumfluorid genannt werden. Optional können die Oxyfluorid- oder Fluoridpartikel auch porös oder hohl sein, um den Brechwert noch weiter zu reduzieren.

Sofern vorhanden, wird die hydrophile Verbindung der Zusammensetzung $C_{R-LI-1}$ bevorzugt aus den bereits oben beschriebenen hydrophilen Polymeren oder den hydrolysierbaren hydrophilen Organosilanen oder Gemischen davon ausgewählt.

Wie dem Fachmann allgemein bekannt ist, weisen hydrolysierbare Organosilane neben den organischen Resten, die über ein C-Atom mit dem Si-Atom verbunden sind, auch solche Reste auf, die sich unter Einwirkung von Wasser (und gegebenenfalls Säure oder Base) hydrolytisch vom Si-Atom abspalten lassen.

In einer bevorzugten Ausführungsform weist daher das hydrolysierbare hydrophile Organosilan zumindest einen an das Si-Atom gebundenen und hydrolytisch abspaltbaren Rest auf, der aus Alkoxy (bevorzugt $C_{1-4}$-Alkoxy wie z.B. Methoxy, Ethoxy oder Propoxy), Acyloxy (z.B. Acetoxy), Cycloalkyloxy, Aryloxy, Acylalkylenoxy, Arylalkylenoxy, Halogen, oder Kombinationen davon ausgewählt wird.

Solche hydrolysierbaren hydrophilen Organosilane sind dem Fachmann grundsätzlich bekannt und kommerziell erhältlich bzw. durch dem Fachmann geläufige Syntheseverfahren herstellbar.

In einer bevorzugten Ausführungsform weist das hydrolysierbare hydrophile Organsilan die folgende Formel (IV) auf:

$$R_oX_mSiB_n \qquad (IV)$$

wobei

m=1-3, n=1-2 und o=0-1, unter der Voraussetzung, dass m+n+o=4,
der Rest X ausgewählt wird aus Halogen oder $C_{1-4}$-Alkoxy, wobei für m=2-3 die einzelnen Reste X gleich oder unterschiedlich sein können,
der Rest R $C_{1-4}$Alkyl ist,
der Rest B die Struktur -B1-B2 aufweist, in der B2 eine endständige hydrophile Gruppe ist, und -B1- entweder eine Spacer-Gruppe, die die hydrophile Gruppe B2 mit dem Si-Atom verbindet, oder eine kovalente Bindung darstellt,
wobei die endständige hydrophile Gruppe -B2 ausgewählt wird aus Polyvinylpyrrolidon, Polyalkoxy (bevorzugt Polyethoxy oder Polypropoxy), Poly(meth)acrylat, Sulfonsäure oder einem Salz davon, Sulfonsäureester, oder einer Kombination dieser Gruppen,
wobei für n=2 die einzelnen Reste B gleich oder unterschiedlich sein können.

Enthält die hydrophile Gruppe -B2 ein Polyalkoxy (bevorzugt Polyethoxy oder Polypropxy), so kann der Alkoxylierungsgrad (bevorzugt Ethoxylierungsgrad oder Propoxylierungsgrad) über einen breiten Bereich variiert werden und liegt beispielsweise im Bereich von 2 bis 80, bevorzugter 2 bis 30 oder 4 bis 30.

Beispielhaft können in diesem Zusammenhang folgende hydrolysierbare hydrophile Organosilane genannt werden: 2-[Methoxy(Polyethylenoxy[ 6-9])propyl]-trimethoxysilan,

2-[Methoxy(Polyethylenoxy[9-11 ])propyl]-trimethoxysilan,
2-[Methoxy(Polyethylenoxy[11-13])propyl]-trimethoxysilan,
2-[Methoxy(Polyethyleneoxy[13-15])propyl]-trimethoxysilan,
Bis-propyl-trimethoxysilan Polyethylenoxid[6-9]).

Enthält die hydrophile Gruppe -B2 ein Poly(meth)acrylat, so kann dieses ausschließlich aus identischen Monomereinheiten wie $CH_2=C(CH_3)COOC_{1-4}$-Alkyl (z.B. $CH_2=C(CH_3)COOCH_3$), $CH_2=C(H)COOC_{1-4}$-Alkyl (z.B. $CH_2=C(H)COOCH_3$), Hydroxyethylenmethacrylat (HEMA), 2-Acrylamido-2-methylpropansulfonsäure (AMPS), Trimethylolpropantriacrylat oder Pentaerythritoltetraacrylat oder aus einem Gemisch dieser Monomereinheiten aufgebaut sein und kann optional noch weitere zusätzliche Comonomereinheiten enthalten. Das Poly(meth)acrylat als hydrophile Gruppe B2 kann beispielsweise über eine Estergruppe mit der Spacer-Gruppe -B1- oder dem Si-Atom verknüpft sein.

Bevorzugt handelt es sich bei dem Sulfonsäureester um den Methyl- oder Ethylester.

Die Spacer-Gruppe kann, sofern sie vorliegt, in breitem Umfang variiert werden. Als Spacer-Gruppe kommt beispielsweise eine Alkylen-Gruppe wie $C_{1-8}$Alkylen, bevorzugter $C_{1-3}$Alkylen in Frage. Alternativ kann die Spacergruppe auch aus - Arylen-; -$C_{1-6}$Alkylen-Arylen-; -Arylen-$C_{1-6}$Alkylen-; -$C_{1-6}$Alkylen-Arylen-$C_{1-6}$Alkylen-; -Poly($C_{3-6}$Alkoxylen)-, fluoriertem oder perfluoriertem -$C_{1-8}$Alkylen-, fluoriertem oder perfluoriertem -Poly($C_{2-6}$Alkoxylen)-ausgewählt werden.

Optional kann die Zusammensetzung $C_{R-LI-1}$ noch ein (Meth)acrylharz, oder ein Epoxidharz oder ein Gemisch davon enthalten.

Zur besseren Vernetzung der funktionellen Organosilanmoleküle untereinander oder mit weiteren optionalen Komponenten kann die Zusammensetzung $C_{R-LI-1}$ noch geeignete Katalysatoren enthalten. Solche Katalysatoren, mit denen die thermisch oder UV-initiierte Vernetzung unterstützt werden kann, sind dem Fachmann grundsätzlich bekannt.

Die flüssige Zusammensetzung $C_{R-LI-1}$ wird durch Schleuderbeschichtung oder Tauch-Schleuderbeschichtung aufgebracht.

Hinsichtlich der Einzelheiten der Schleuder- oder Tauch-Schleuderbeschichtung kann auf die oben bei der Beschreibung der Abscheidung der Hartschicht HC-1 gemachten Ausführungen verwiesen werden.

Wie oben erwähnt, wird während und/oder nach dem Aufbringen der flüssigen Zusammensetzung $C_{R-LI-1}$ eine thermische Behandlung und/oder UV-Behandlung durchgeführt, um ein Vernetzung der hydrolysierbaren funktionellen Organosilanmoleküle zu bewirken.

Ein geeigneter Temperaturbereich für die thermische Behandlung ist beispielsweise 40°C - 120°C, bevorzugter 60°C-100°C. In diesem Temperaturbereich können die funktionellen Gruppen der Organosilanmoleküle (z.B. die Epoxygruppen) miteinander reagieren und somit eine dreidimensionale Vernetzung in der Hartschicht bewirken.

Sofern die Vernetzung der funktionellen Gruppen der Organosilanmoleküle durch UV-Behandlung bzw. UV-Bestrahlung bewirkt wird (z.B. bei (Meth)acryl oder (Meth)acryloxy), sind dem Fachmann geeignete Wellenlängenbereiche grundsätzlich bekannt. Die UV-Behandlung kann beispielsweise mit einer Wellenlänge im Bereich von 100 nm - 380 nm erfolgen.

Die thermische Behandlung und/oder UV-Behandlung kann so durchgeführt werden, dass bereits in Schritt (ii) eine vollständige oder im Wesentlichen vollständige Vernetzung der funktionellen Organosilanmoleküle erreicht wird.

Alternativ kann es auch bevorzugt sein, die thermische Behandlung und/oder UV-Behandlung so durchzuführen, dass in Schritt (ii) eine erste, aber noch unvollständige Vernetzung der hydrolysierbaren funktionellen Organosilanmoleküle erfolgt. Dies bewirkt, dass zwischen den Organosilanmolekülen und gegebenenfalls optionalen Komponenten der flüssigen Zusammensetzung $C_{R-LI-1}$ bereits eine gewisse dreidimensionale Vernetzung und damit eine ausreichende Vorhärtung der Schicht realisiert wird, so dass auf dieser Schicht anschließend weitere Schichten abgeschieden werden können. Der Vernetzungsgrad kann mit bekannten analytischen Verfahren überprüft werden.

Bei einer noch unvollständigen Vernetzung in Schritt (ii) erfolgt die abschließende Aushärtung der Schicht R-LI-1 bevorzugt erst, nachdem alle weiteren Schichten abgeschieden wurden. Bevorzugt werden also alle abgeschiedenen Schichten gemeinsam (d.h. zeitgleich) einer abschließenden Aushärtung durch thermische Behandlung und/oder UV-Behandlung unterzogen. Neben einer verbesserten Prozesseffizienz führt dies auch zu einer verbesserten Haftungsfestigkeit benachbarter Schichten.

Wie oben erwähnt, handelt es sich bei der bzw. den die Lichtreflexion modifizierenden Schicht(en) in einer bevorzugten Ausführungsform um Antireflexschichten. Grundsätzlich kann bereits mit einer niedrigbrechenden Antireflexschicht unter Ausnutzung der destruktiven Interferenz der reflektierten Strahlen eine ausreichende Verminderung des Reflexionsgrades erzielt werden. Dem Fachmann ist aufgrund seines Fachwissens bekannt, welche Schichtdicke und (in Abhängigkeit von dem Brechungsindex des Substrats) welchen Brechungsindex $n_{R-LI-1}$ er für diese niedrigbrechende Antireflexschicht R-LI-1 zu wählen hat. Im Rahmen der vorliegenden, vorhergehend beschrieben Verfahren ist es daher möglich, dass das optische Element nur eine Antireflexschicht, nämlich die Schicht R-LI-1 aufweist.

Grundsätzlich ist bekannt, dass die Modifizierung des Reflexionsgrades auch durch zwei oder mehr Schichten realisiert werden kann. Bevorzugt handelt es sich dabei um eine alternierende Abfolge von hochbrechenden und niedrigbrechenden Schichten. Mit solchen Anordnungen können grundsätzlich Antireflexbeschichtungen, aber auch Beschichtungen mit einem Spiegel-Effekt realisiert werden. Je nach Anwendung des optischen Elements können beide Effekte von Interesse sein.

In einer bevorzugten Ausführungsform erfolgt in Schritt (ii) daher auch das Aufbringen zumindest einer flüssigen Zusammensetzung $C_{R-HI-1}$ durch Schleuderbeschichtung oder Tauch-Schleuderbeschichtung zur Ausbildung zumindest

einer die Lichtreflexion des Substrats modifizierenden Schicht R-HI-1 mit einem Brechungsindex $n_{AR-HI-1}$, wobei $n_{R-HI-1} > n_{R-LI-1}$ ist und wobei durch thermische Behandlung und/oder UV-Behandlung während und/oder nach dem Aufbringen der flüssigen Zusammensetzung $C_{R-HI-1}$ eine Vernetzung der hydrolysierbaren funktionellen Organosilanmoleküle stattfindet.

Diese flüssige Zusammensetzung $C_{R-HI-1}$ für die Ausbildung einer die Lichtreflexion modifizierenden Schicht R-HI-1 enthält bevorzugt:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird; und/oder ein Hydrolyse- und/oder Kondensationsprodukt des funktionellen Organosilans,
- ein partikelförmiges Metalloxid, das bevorzugt aus $TiO_2$, $SnO_2$, $ZrO_2$, $Sb_2O_5$, $Sb_2O_3$, $SiO_2$ oder Gemischen oder Mischoxiden oder Core-Shell-Strukturen davon ausgewählt wird.

In Schritt (ii) kann zuerst die Zusammensetzung $C_{R-HI-1}$ und später die Zusammensetzung $C_{R-LI-1}$ aufgebracht werden. Alternativ ist es auch möglich, zuerst die Zusammensetzung $C_{R-LI-1}$ und später die Zusammensetzung $C_{R-HI-1}$ aufzubringen. Werden mehrere Zusammensetzungen $C_{R-LI-1}$ und $C_{R-HI-1}$ aufgebracht, geschieht dies bevorzugt in alternierender Reihenfolge, so dass sich hochbrechende und niedrigbrechende Schichten abwechseln.

Die durch das beschriebene Verfahren erhaltene hochbrechende Schicht R-HI-1 (also nach Durchführung der abschließenden thermischen Behandlung in Schritt (iv) gemäß des ersten, vorhergehend beschriebenen Verfahrens bzw. in Schritt (iii) gemäß des zweiten, vorhergehend beschriebenen Verfahrens) weist einen Brechungsindex $n_{R-HI-1}$ auf. Dieser Brechungsindex ist größer als derjenige der niedrigbrechenden Schicht R-LI-1.

Bevorzugt wird dieser Brechungsindex der Antireflexschicht R-HI-1 durch Zugabe geeigneter hochbrechender Metalloxidpartikel (z.B. partikelförmiges $TiO_2$, $SnO_2$, $ZrO_2$, $Sb_2O_5$, $Sb_2O_3$) zu höheren Werten verschoben werden.

Die Art und Menge des hochbrechenden Metalloxids wird bevorzugt so ausgewählt, dass

$$n_{AR-HI-1} / n_{AR-LI-1} \geq 1.20$$

Wenn das Substrat ein optisches Glas aus Kunststoff umfasst, weist die Antireflexschicht AR-HI-1 bevorzugt einen Brechungsindex $n_{AR-HI-1}$ im Bereich von 1,65-1,90 auf.

Bevorzugt gilt, dass $n_{R-HI-1} > n_{HC-1} > n_{R-LI-1}$

Der mittlere Partikeldurchmesser des hochbrechenden Metalloxids sollte bevorzugt so gewählt sein, dass die Transparenz der Beschichtung nicht beeinflusst wird. In einer bevorzugten Ausführungsform weist das hochbrechende Metalloxid einen mittleren Partikeldurchmesser im Bereich von 2 nm bis 150 nm, noch bevorzugter von 2 nm bis 70 nm auf. Der mittlere Partikeldurchmesser wird über dynamische Lichtstreuung gemessen.

Hinsichtlich der Eigenschaften des in der Zusammensetzung $C_{R-HI-1}$ vorliegenden hydrolysierbaren funktionellen Organosilans kann auf die oben bei der Beschreibung der Zusammensetzung $C_{R-LI-1}$ gemachten Ausführungen verwiesen werden.

Es ist möglich, dass das in der Zusammensetzung $C_{R-HI-1}$ vorliegende funktionelle Organosilan dem in der Zusammensetzung $C_{R-LI-1}$ vorliegenden funktionellen Organosilan und/oder dem in der Zusammensetzung $C_{HC-1}$ vorliegenden funktionellen Organosilan entspricht. Alternativ ist es auch möglich, dass sich diese hydrolysierbaren funktionellen Organosilane unterscheiden, beispielsweise in der funktionellen Gruppe des an das Si-Atom gebundenen organischen Rests.

In einer bevorzugten Ausführungsform weisen die in den Zusammensetzungen $C_{HC-1}$, $C_{R-HI-1}$ und $C_{R-LI-1}$ vorliegenden hydrolysierbaren funktionellen Organosilane die gleiche funktionelle Gruppe in dem an das Si-Atom gebundenen organischen Rest auf (beispielsweise jeweils (Meth)acryloxy oder Epoxy als funktionelle Gruppe).

Zur Einstellung einer geeigneten Viskosität kann die Zusammensetzung $C_{R-HI-1}$ ein Lösungsmittel enthalten. Hinsichtlich geeigneter Lösungsmittel kann auf die obigen, bei der Beschreibung der Zusammensetzung $C_{HC-1}$ gemachten Ausführungen verwiesen werden.

Optional kann die Zusammensetzung $C_{R-HI-1}$ noch ein (Meth)acrylharz, oder ein Epoxidharz oder ein Gemisch davon enthalten.

Zur besseren Vernetzung der funktionellen Organosilanmoleküle untereinander oder mit weiteren optionalen Komponenten kann die Zusammensetzung $C_{R-HI-1}$ noch geeignete Katalysatoren enthalten. Solche Katalysatoren, mit denen die thermisch oder UV-initiierte Vernetzung unterstützt werden kann, sind dem Fachmann grundsätzlich bekannt.

Es ist möglich, dass in Schritt (ii) nur die flüssige Zusammensetzung $C_{R-LI-1}$, jedoch keine weiteren flüssigen Zusammensetzungen aufgebracht werden. Alternativ ist es jedoch auch möglich, dass Schritt (ii) in zwei oder mehr Teilschritte zerfällt und in diesen Teilschritten die Zusammensetzung $C_{R-HI-1}$ und optional weitere Zusammensetzungen

$C_{R\text{-}LI\text{-}2}$,
$C_{AR\text{-}LI\text{-}3}$, ..... bzw. $C_{AR\text{-}HI\text{-}2}$, $C_{AR\text{-}HI\text{-}3}$, .... jeweils durch Schleuderbeschichtung oder Tauch-Schleuderbeschichtung aufgebracht werden, die bevorzugt zu einer alternierenden Abfolge hoch- und niedrigbrechender Schichten führen. Hinsichtlich der Eigenschaften dieser Zusammensetzungen $C_{AR\text{-}LI\text{-}2}$, $C_{AR\text{-}LI\text{-}3}$, ..... bzw. $C_{AR\text{-}HI\text{-}2}$, $C_{AR\text{-}HI\text{-}3}$, .... kann auf die oben gemachten Ausführungen bei der Beschreibung der Zusammensetzungen $C_{AR\text{-}HI\text{-}1}$ und $C_{AR\text{-}LI\text{-}1}$ verwiesen werden.

Insbesondere für die Bereitstellung einer Antireflexwirkung kann es bevorzugt sein, wenn die vom Substrat aus gesehen äußerste Schicht der die Reflexion modifizierenden Schichten eine niedrig brechende Schicht ist. In einer bevorzugten Ausführungsform handelt es sich bei den die Reflexion modifizierenden Schichten um Antireflex-Schichten und die Antireflexschicht AR-LI-1 stellt die äußerste Antireflexschicht dar (vom Substrat aus betrachtet). Wenn diese Schicht R-LI-1 die oben beschriebene hydrophile Verbindung enthält, ist das Aufbringen einer Antifog-Schicht nicht mehr erforderlich.

Sofern die Zusammensetzungen $C_{AR\text{-}LI\text{-}2}$, $C_{AR\text{-}LI\text{-}3}$, bzw. $C_{AR\text{-}HI\text{-}2}$, $C_{AR\text{-}HI\text{-}3}$ aufgebracht werden, ist es möglich, dass diese ebenfalls die oben beschriebene hydrophile Verbindung enthalten.

Für die Bereitstellung einer Spiegelwirkung kann es bevorzugt sein, wenn die vom Substrat aus gesehen äußerste Schicht der die Reflexion modifizierenden Schichten eine hoch brechende Schicht ist. In einer bevorzugten Ausführungsform stellt die Antireflexschicht AR-HI-1 die äußerste Antireflexschicht dar (vom Substrat aus betrachtet).

In dem ersten, vorgehend beschriebenen Verfahren erfolgt nach Schritt (ii), d.h. der Abscheidung einer oder mehrerer die Lichtreflexion modifizierenden Schichten (z.B. Antireflexschichten), in Schritt (iii) die Abscheidung einer hydrophilen Antifog-Schicht AF-1.

Wie oben erläutert, enthält gemäß des zweiten, vorgehend beschriebenen Verfahrens zumindest eine der die Reflexion modifizierenden Schichten, bevorzugt zumindest die vom Substrat aus betrachtet äußerste dieser Schichten bereits eine hydrophile Verbindung und die Abscheidung einer separaten Antifog-Schicht ist daher nicht mehr notwendig.

Sofern eine flüssige Zusammensetzung $C_{AF\text{-}1}$ durch eine Schleuderbeschichtung oder Tauch-Schleuderbeschichtung zur Ausbildung einer hydrophilen Antifog-Beschichtung AF-1 aufgebracht wird, enthält diese flüssige Zusammensetzung $C_{AF\text{-}1}$ zumindest eine der folgenden hydrophilen Komponenten (a) und (b) oder ein Gemisch dieser hydrophilen Komponenten (a) und (b):

(a) ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl und Vinyl ausgewählt wird, und/oder ein Hydrolyse- und/oder Kondensationsprodukt des funktionellen Organosilans,
sowie ein hydrophiles Polymer; und/oder
(b) ein hydrolysierbares hydrophiles Organosilan, das zumindest einen an das Si-Atom gebundenen organischen Rest mit mindestens einer hydrophilen Gruppe aufweist, und/oder ein Hydrolyse- und/oder Kondensationsprodukt des hydrophilen Organosilans.

Hinsichtlich der Eigenschaften des hydrolysierbaren funktionellen Organosilans kann auf die oben bei der Beschreibung der Abscheidung der Hartschicht HC-1 und der Schicht R-LI-1 gemachten Ausführungen verwiesen werden.

Hinsichtlich der Eigenschaften des hydrophilen Polymers kann auf die oben bei der Beschreibung der Abscheidung der Schicht R-LI-1 gemachten Ausführungen verwiesen werden.

Hinsichtlich der Eigenschaften des hydrolysierbaren hydrophilen Organosilans kann auf die oben bei der Beschreibung der Abscheidung der Schicht R-LI-1 gemachten Ausführungen verwiesen werden.

Optional kann die hydrophile Komponente (b) neben dem hydrolysierbaren hydrophilen Organosilan auch noch das hydrolysierbare funktionelle Organosilan umfassen.

Bevorzugt wird der Anteil der hydrophilen Komponenten (a) und/oder(b) in der flüssigen Zusammensetzung $C_{AF\text{-}1}$ so gewählt, dass die resultierende Antifog-Beschichtung AF-1 ausreichend hydrophil ist, um mit Wasser, das auf seiner Oberfläche kondensiert, einen Kontaktwinkel von weniger als 30° auszubilden oder bevorzugt sogar eine vollständige Benetzung mit einem Wasserfilm (Kontaktwinkel von 0°) zu bewirken.

In einer bevorzugten Ausführungsform enthält die für die Abscheidung der Antifog-Schicht AF-1 verwendete Zusammensetzung $C_{AF\text{-}1}$ weder ein partikelförmiges anorganisches Material, das aus einem anorganischen Oxid mit porösen oder hohlen Partikeln, einem Oxyfluorid oder einem Fluorid ausgewählt wird, noch ein partikelförmiges Metalloxid, insbesondere kein partikelförmiges Metalloxid, das aus $TiO_2$, $SnO_2$, $ZrO_2$, $Sb_2O_5$, $Sb_2O_3$, $SiO_2$ oder Gemischen oder Mischoxiden oder Core-Shell-Strukturen davon ausgewählt wird.

Die flüssige Zusammensetzung $C_{AF\text{-}1}$ wird durch Schleuderbeschichtung oder Tauch-Schleuderbeschichtung aufgebracht. Hinsichtlich der Einzelheiten der Schleuder- oder Tauch-Schleuderbeschichtung kann auf die oben bei der Beschreibung der Abscheidung der Hartschicht HC-1 gemachten Ausführungen verwiesen werden.

Sofern eine Antifog-Schicht AF-1 aufgebracht wird, stellt diese Schicht die äußerste Schicht des beschichteten

optischen Elements dar.

Für diesen Fall kann direkt im Anschluss an die Abscheidung dieser Schicht AF-1 die abschließende Aushärtung (durch thermische und/oder UV-Behandlung) aller abgeschiedenen Schichten erfolgen.

Während der abschließenden Vernetzung der Organosilane durch thermische Behandlung und/oder UV-Behandlung (d.h. Schritt (iv) in dem ersten, vorhergehend beschriebenen Verfahren bzw. Schritt (iii) in dem zweiten, vorhergehend beschriebenen Verfahren) kann es zu einer Abnahme der jeweiligen Schichtdicken kommen.

Hinsichtlich geeigneter Bedingungen für die abschließende Vernetzung der Organosilane durch thermische Behandlung und/oder UV-Behandlung kann auf die obigen Ausführungen verwiesen werden. Ein geeigneter Temperaturbereich für die thermische Behandlung ist beispielsweise 40°C - 120°C, bevorzugter 60°C-100°C. In diesem Temperaturbereich können die funktionellen Gruppen der Organosilanmoleküle (z.B. die Epoxygruppen) miteinander reagieren und somit eine dreidimensionale Vernetzung in der Hartschicht bewirken.

Sofern die Vernetzung der funktionellen Gruppen der Organosilanmoleküle durch UV-Behandlung bzw. UV-Bestrahlung bewirkt wird (z.B. bei (Meth)acryl oder (Meth)acryloxy), sind dem Fachmann geeignete Wellenlängenbereiche grundsätzlich bekannt. Die UV-Behandlung kann beispielsweise mit einer Wellenlänge im Bereich von 100 nm - 380 nm erfolgen.

Diese abschießende thermische Behandlung und/oder UV-Behandlung aller abgeschiedenen Schichten des mehrschichtigen optischen Elements wird bevorzugt über eine Zeitdauer durchgeführt, die zu einer möglichst vollständigen Vernetzung der Organosilanmoleküle in den einzelnen Schichten führt.

Es ist möglich, dass die Schritte (i), (ii), (iii) und gegebenenfalls (iv) unmittelbar aufeinander folgen. Alternativ ist es auch möglich, dass zwischen manchen oder allen diesen Verfahrensschritten optional noch weitere Verfahrensschritte durchgeführt werden. Wie oben bereits erläutert, ist es auch möglich, dass alle oder zumindest manche der Verfahrensschritte (i), (ii), (iii) und gegebenenfalls (iv) zwei oder mehr Teilschritte umfassen, beispielsweise, wenn zwei oder mehr Schichten zur Modifizierung der Lichtreflexion des Substrats aufgebracht werden (z.B. in Form alternierender niedrig- und hochbrechender Schichten).

Die Dicke der Hartschicht HC-1 in dem durch das beschriebene Verfahren erhaltenen optischen Elements (d.h. nach Durchführung des finalen Vernetzungsschritts) liegt bevorzugt im Bereich von 1,0 μm bis 15 μm. Wie bereits oben erwähnt, weist diese Hartschicht HC-1 bevorzugt einen Brechungsindex auf, der möglichst gut an den Brechungsindex des Substrats angepasst ist. Handelt es sich beispielsweise um ein Substrat, das ein Kunststoffglas umfasst, weist die Hartschicht HC-1 bevorzugt einen Brechungsindex $n_{HC-1}$ im Bereich von 1,45-1,80 auf.

Die Dicke der Schicht R-LI-1 in dem durch das beschriebene Verfahren erhaltenen optischen Elements (d.h. nach Durchführung des finalen Vernetzungsschritts) liegt bevorzugt im Bereich von 10 nm bis 150 nm. Wie bereits oben erwähnt, weist diese Schicht R-LI-1 einen Brechungsindex $n_{AR-LI-1}$ auf, der kleiner ist als der Brechungsindex der Hartschicht HC-1. Handelt es sich beispielsweise um ein Substrat, das ein Kunststoffglas umfasst, weist die Schicht R-LI-1 bevorzugt einen Brechungsindex $n_{R-LC-1}$ im Bereich von 1,20-1,40 auf. Sofern die Schicht R-HI-1 vorhanden ist, weist diese in dem durch das beschriebene Verfahren erhaltenen optischen Element (d.h. nach Durchführung des finalen Vernetzungsschritts) bevorzugt eine Dicke im Bereich von 10 nm bis 150 nm. Wie bereits oben erwähnt, weist diese Schicht R-HI-1 einen Brechungsindex $n_{R-HI-1}$ auf, der größer ist als der Brechungsindex der Schicht R-LI-1 und bevorzugt größer ist als der Brechungsindex der Hartschicht HC-1. Handelt es sich beispielsweise um ein Substrat, das ein Kunststoffglas umfasst, weist die Schicht R-HI-1 bevorzugt einen Brechungsindex $n_{R-HI-1}$ im Bereich von 1,65-1,90 auf. Sofern die Antifog-Schicht AF-1 vorhanden ist, kann deren Dicke in dem durch das beschriebene Verfahren erhaltenen optischen Element (d.h. nach Durchführung des finalen Vernetzungsschritts) über einen breiten Bereich variiert werden. Beispielsweise kann die Schichtdicke so gering gewählt werden, dass die Antifog-Schicht AF-1 optisch nicht mehr wirksam ist. Für diesen Fall beträgt die Dicke der Antifog-Schicht weniger als 10 nm. Alternativ ist es auch möglich, dass die Dicke der Antifog-Schicht AF-1 im Bereich von 10-150 nm liegt. Der Brechungsindex wird dabei bevorzugt so gewählt, dass er dem optischen Design des optischen Elements in geeigneter Weise angepasst ist. Aufgrund seines Fachwissens ist die Auswahl eines geeigneten Brechungsindex für den Fachmann ohne weiteres möglich.

Die vorliegende Erfindung betrifft auch ein mehrschichtiges optisches Element, herstellbar oder hergestellt nach dem ersten, vorhergehend beschriebenen Verfahren oder demzweiten, vorhergehend beschriebenen Verfahren.

**Patentansprüche**

1. Ein Verfahren zur Herstellung eines mehrschichtigen optischen Elements, umfassend:

   (i) ein Aufbringen einer flüssigen Zusammensetzung $C_{HC-1}$ durch Schleuderbeschichtung oder Tauch-Schleuderbeschichtung auf ein Substrat zur Ausbildung einer Hartschicht HC-1 mit einem Brechungsindex $n_{HC-1}$,

   die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,

und eine thermische Behandlung und/oder UV-Behandlung während und/oder nach dem Aufbringen der flüssigen Zusammensetzung $C_{HC-1}$, um ein Vernetzung der hydrolysierbaren funktionellen Organosilanmoleküle zu bewirken;

(ii) nach Schritt (i) das Aufbringen zumindest einer flüssigen Zusammensetzung $C_{R-LI-1}$ durch Schleuderbeschichtung oder Tauch-Schleuderbeschichtung zur Ausbildung mindestens einer die Lichtreflexion des Substrats modifizierenden Schicht R-LI-1 mit einem Brechungsindex $n_{R-LI-1}$, wobei $n_{R-LI-1}<n_{HC-1}$,

die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges anorganisches Material, das aus einem anorganischen Oxid mit porösen oder hohlen Partikeln, einem Oxyfluorid oder einem Fluorid ausgewählt wird,

und eine thermische Behandlung und/oder UV-Behandlung während und/oder nach dem Aufbringen der flüssigen Zusammensetzung $C_{R-LI-1}$, um eine Vernetzung der hydrolysierbaren funktionellen Organosilanmoleküle zu bewirken;

(iii) nach Schritt (ii) das Aufbringen einer flüssigen Zusammensetzung $C_{AF-1}$ durch eine Schleuderbeschichtung oder Tauch-Schleuderbeschichtung zur Ausbildung einer hydrophilen Antifog-Beschichtung AF-1, die flüssige Zusammensetzung $C_{AF-1}$ zumindest eine der folgenden hydrophilen Komponenten (a) und (b) oder ein Gemisch dieser Komponenten (a) und (b) umfassend:

(a) ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans, sowie ein hydrophiles Polymer;
und/oder
(b) ein hydrolysierbares hydrophiles Organosilan, das zumindest einen an das Si-Atom gebundenen organischen Rest mit mindestens einer hydrophilen Gruppe aufweist, und/oder ein Hydrolyse- und/oder Kondensationsprodukt des hydrophilen Organosilans;

(iv) nach Schritt (iii) eine thermische Behandlung und/oder UV-Behandlung der aufgebrachten Schichten;

**dadurch gekennzeichnet, dass** die hydrophile Antifog-Beschichtung AF-1 die äußerste Schicht des optischen Elements darstellt.

**2.** Das Verfahren nach Anspruch 1, wobei die flüssige Zusammensetzung $C_{R-LI-1}$, aus der die Schicht R-LI-1 gebildet wird, ein hydrophiles Polymer oder ein hydrolysierbares hydrophiles Organosilan oder ein Gemisch davon enthält.

**3.** Das Verfahren nach Anspruch 1 oder 2, wobei in Schritt (ii) außerdem das Aufbringen einer flüssigen Zusammensetzung $C_{R-HI-1}$ durch Schleuderbeschichtung oder Tauch-Schleuderbeschichtung zur Ausbildung einer die Lichtreflexion modifizierenden Schicht R-HI-1 mit einem Brechungsindex $n_{R-HI-1}$ erfolgt, wobei $n_{R-HI-1} > n_{HC-1} > n_{R-LI-1}$ ist, die flüssige Zusammensetzung $C_{R-HI-1}$ umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl und Vinyl ausgewählt wird, und/oder ein Hydrolyse- und/oder Kondensationsprodukt des funktionellen Organosilans,
- ein partikelförmiges Metalloxid, das bevorzugt aus $TiO_2$, $SnO_2$, $ZrO_2$, $Sb_2O_5$, $Sb_2O_3$, $SiO_2$ oder Gemischen

oder Mischoxiden oder Core-Shell-Strukturen davon ausgewählt wird.

**4.** Ein Verfahren zur Herstellung eines mehrschichtigen optischen Elements, umfassend:

(i) ein Aufbringen einer flüssigen Zusammensetzung $C_{HC-1}$ durch Schleuderbeschichtung oder Tauch-Schleuderbeschichtung auf ein Substrat zur Ausbildung einer Hartschicht HC-1 mit einem Brechungsindex $n_{HC-1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,

und eine thermische Behandlung und/oder UV-Behandlung während und/oder nach dem Aufbringen der flüssigen Zusammensetzung $C_{HC-1}$, um eine Vernetzung der hydrolysierbaren funktionellen Organosilanmoleküle zu bewirken;
(ii) nach Schritt (i) das Aufbringen zumindest einer flüssigen Zusammensetzung $C_{R-LI-1}$ durch Schleuderbeschichtung oder Tauch-Schleuderbeschichtung zur Ausbildung mindestens einer die Lichtreflexion modifizierenden Schicht R-LI-1 mit einem Brechungsindex $n_{R-LI-1}$, wobei $n_{R-LI-1}<n_{HC-1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges anorganisches Material, das aus einem anorganischen Oxid mit porösen oder hohlen Partikeln, einem Oxyfluorid oder einem Fluorid ausgewählt wird; und

wobei die flüssige Zusammensetzung $C_{R-LI-1}$ eine hydrophile Verbindung enthält, die aus einem hydrophilen Polymer, einem hydrolysierbaren hydrophilen Organosilan oder einem Gemisch davon ausgewählt wird; und eine thermische Behandlung und/oder UV-Behandlung während und/oder nach dem Aufbringen der flüssigen Zusammensetzung $C_{R-LI-1}$, um eine Vernetzung der hydrolysierbaren funktionellen Organosilanmoleküle zu bewirken;
(iii) nach Schritt (ii) eine thermische Behandlung und/oder UV-Behandlung der aufgebrachten Schichten;

**dadurch gekennzeichnet, dass** die Ausbildung der äußersten Schicht des optischen Elements durch die Zusammensetzung $C_{R-LI-1}$ erfolgt und die äußerste Schicht eine Antifog-Wirkung aufweist.

**5.** Ein Verfahren zur Herstellung eines mehrschichtigen optischen Elements, umfassend:

(i) ein Aufbringen einer flüssigen Zusammensetzung $C_{HC-1}$ durch Schleuderbeschichtung oder Tauch-Schleuderbeschichtung auf ein Substrat zur Ausbildung einer Hartschicht HC-1 mit einem Brechungsindex $n_{HC-1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,

und eine thermische Behandlung und/oder UV-Behandlung während und/oder nach dem Aufbringen der flüssigen Zusammensetzung $C_{HC-1}$, um eine Vernetzung der hydrolysierbaren funktionellen Organosilanmoleküle zu bewirken;
(ii) nach Schritt (i) das Aufbringen zumindest einer flüssigen Zusammensetzung $C_{R-LI-1}$ durch Schleuderbeschichtung oder Tauch-Schleuderbeschichtung zur Ausbildung mindestens einer die Lichtreflexion modifizierenden Schicht R-LI-1 mit einem Brechungsindex $n_{R-LI-1}$, wobei $n_{R-LI-1}<n_{HC-1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges anorganisches Material, das aus einem anorganischen Oxid mit porösen oder hohlen Partikeln, einem Oxyfluorid oder einem Fluorid ausgewählt wird; und

das Aufbringen einer flüssigen Zusammensetzung $C_{R\text{-}HI\text{-}1}$ durch Schleuderbeschichtung oder Tauch-Schleuderbeschichtung zur Ausbildung einer die Lichtreflexion modifizierenden Schicht R-HI-1 mit einem Brechungsindex $n_{R\text{-}HI\text{-}1}$, wobei $n_{R\text{-}HI\text{-}1} > n_{HC\text{-}1} > n_{R\text{-}LI\text{-}1}$ ist, die flüssige Zusammensetzung $C_{R\text{-}HI\text{-}1}$ umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges Metalloxid, das bevorzugt aus $TiO_2$, $SnO_2$, $ZrO_2$, $Sb_2O_5$, $Sb_2O_3$, $SiO_2$ oder Gemischen oder Mischoxiden oder Core-Shell-Strukturen davon ausgewählt wird,
wobei zumindest die flüssige Zusammensetzung $C_{R\text{-}LI\text{-}1}$ eine hydrophile Verbindung enthält, die aus einem hydrophilen Polymer, einem hydrolysierbaren hydrophilen Organosilan oder einem Gemisch davon ausgewählt wird;
und
eine thermische Behandlung und/oder UV-Behandlung während und/oder nach dem Aufbringen der flüssigen Zusammensetzung $C_{R\text{-}LI\text{-}1}$ und dem Aufbringen der flüssigen Zusammensetzung $C_{R\text{-}HI\text{-}1}$, um eine Vernetzung der hydrolysierbaren funktionellen Organosilanmoleküle zu bewirken;

(iii) nach Schritt (ii) eine thermische Behandlung und/oder UV-Behandlung der aufgebrachten Schichten;

**dadurch gekennzeichnet, dass** die Ausbildung der äußersten Schicht des optischen Elements durch die Zusammensetzung $C_{R\text{-}LI\text{-}1}$ erfolgt und die äußerste Schicht eine Antifog-Wirkung aufweist.

**6.** Ein Verfahren zur Herstellung eines mehrschichtigen optischen Elements, umfassend:

(i) ein Aufbringen einer flüssigen Zusammensetzung $C_{HC\text{-}1}$ durch Schleuderbeschichtung oder Tauch-Schleuderbeschichtung auf ein Substrat zur Ausbildung einer Hartschicht HC-1 mit einem Brechungsindex $n_{HC\text{-}1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,

und eine thermische Behandlung und/oder UV-Behandlung während und/oder nach dem Aufbringen der flüssigen Zusammensetzung $C_{HC\text{-}1}$, um eine Vernetzung der hydrolysierbaren funktionellen Organosilanmoleküle zu bewirken;
(ii) nach Schritt (i) das Aufbringen zumindest einer flüssigen Zusammensetzung $C_{R\text{-}LI\text{-}1}$ durch Schleuderbeschichtung oder Tauch-Schleuderbeschichtung zur Ausbildung mindestens einer die Lichtreflexion modifizierenden Schicht R-LI-1 mit einem Brechungsindex $n_{R\text{-}LI\text{-}1}$, wobei $n_{R\text{-}LI\text{-}1} < n_{HC\text{-}1}$, die flüssige Zusammensetzung umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges anorganisches Material, das aus einem anorganischen Oxid mit porösen oder hohlen Partikeln, einem Oxyfluorid oder einem Fluorid ausgewählt wird; und

das Aufbringen einer flüssigen Zusammensetzung $C_{R\text{-}HI\text{-}1}$ durch Schleuderbeschichtung oder Tauch-Schleuderbeschichtung zur Ausbildung einer die Lichtreflexion modifizierenden Schicht R-HI-1 mit einem Brechungsindex $n_{R\text{-}HI\text{-}1}$, wobei $n_{R\text{-}HI\text{-}1} > n_{HC\text{-}1} > n_{R\text{-}LI\text{-}1}$ ist, die flüssige Zusammensetzung $C_{R\text{-}HI\text{-}1}$ umfassend:

- ein hydrolysierbares funktionelles Organosilan, das zumindest einen an das Si-Atom gebundenen organischen Rest mit mindestens einer funktionellen Gruppe aufweist, wobei die funktionelle Gruppe aus Epoxy, Acryl, Methacryl, Acryloxy, Methacryloxy, Allyl oder Vinyl ausgewählt wird, und/oder ein Hydrolyse- und/oder Kondensationsprodukt des funktionellen Organosilans,
- ein partikelförmiges Metalloxid, das bevorzugt aus $TiO_2$, $SnO_2$, $ZrO_2$, $Sb_2O_5$, $Sb_2O_3$, $SiO_2$ oder Gemischen oder Mischoxiden oder Core-Shell-Strukturen davon ausgewählt wird,

wobei zumindest die flüssige Zusammensetzung $C_{R\text{-}HI\text{-}1}$ eine hydrophile Verbindung enthält, die aus einem hydrophilen Polymer, einem hydrolysierbaren hydrophilen Organosilan oder einem Gemisch davon ausgewählt wird;
und
eine thermische Behandlung und/oder UV-Behandlung während und/oder nach dem Aufbringen der flüssigen Zusammensetzung $C_{R\text{-}LI\text{-}1}$ und dem Aufbringen der flüssigen Zusammensetzung $C_{R\text{-}HI\text{-}1}$, um eine Vernetzung der hydrolysierbaren funktionellen Organosilanmoleküle zu bewirken;

(iii) nach Schritt (ii) eine thermische Behandlung und/oder UV-Behandlung der aufgebrachten Schichten;

**dadurch gekennzeichnet, dass** die Ausbildung der äußersten Schicht des optischen Elements durch die Zusammensetzung $C_{R\text{-}HI\text{-}1}$ erfolgt und die äußerste Schicht eine Antifog-Wirkung aufweist.

**7.** Das Verfahren nach einem der vorstehenden Ansprüche, wobei das hydrolysierbare funktionelle Organosilan folgende Formel (I) aufweist:

$$R^6R^7_{3-n}Si(OR^5)_n \qquad (I)$$

worin

- $R^5$ eine unsubstituierte oder substituierte Alkyl-, Acyl-, Alkylenacyl-, Cycloalkyl-, Aryl- oder Alkylenarylgruppe ist,
- $R^6$ ein organischer Rest ist, der mindestens eine funktionelle Gruppe aufweist, wobei die funktionelle Gruppe ausgewählt wird aus Epoxy, Acryl, Methacryl, Acryloxy, Methacryloxy, Ally oder Vinyl,
- $R^7$ eine unsubstituierte oder substituierte Alkyl-, Cycloalkyl-, Aryl- oder Alkylenarylgruppe ist,
- n 2 oder 3 ist.

**8.** Das Verfahren nach einem der vorstehenden Ansprüche, wobei die flüssige Zusammensetzung $C_{HC\text{-}1}$ ein partikelförmiges Oxid, Oxyfluorid und/oder Fluorid, ein Epoxidharz, ein (Meth)acrylharz oder ein Gemisch davon enthält.

**9.** Das Verfahren nach einem der vorstehenden Ansprüche, wobei das hydrophile Polymer aus Poly(N-isopropylacrylamid), Polyacrylamid, Poly(2-oxazolin), Polyethylenimin, Polyacrylsäure, Polyacrylat, Polymethacrylat, Poly(ethylenglykol), Poly(propylenglykol), Polyvinylalkohol, Polyvinylpyrrolidon, Polystyrolsulfonat, Polyvinylsulfonsäure, Polymeren des Maleinsäureanhydrids, Polymethylvinylether oder Gemischen davon ausgewählt wird.

**10.** Das Verfahren nach einem der vorstehenden Ansprüche, wobei das hydrolysierbare hydrophile Organosilan die folgende Formel (IV) aufweist:

$$R_oX_mSiB_n \qquad (IV)$$

wobei

m=1-3, n=1-2 und o=0-1, unter der Voraussetzung, dass m+n+o=4,
der Rest X ausgewählt wird aus Halogen oder $C_{1\text{-}4}$-Alkoxy, wobei für m=2-3 die einzelnen Reste X gleich oder unterschiedlich sein können,
der Rest R $C_{1\text{-}4}$Alkyl ist,
der Rest B die Struktur -B1-B2 aufweist, in der B2 eine endständige hydrophile Gruppe ist, und -B1- entweder eine Spacer-Gruppe, die die hydrophile Gruppe B2 mit dem Si-Atom verbindet, oder eine kovalente Bindung darstellt,
wobei die endständige hydrophile Gruppe -B2 ausgewählt wird aus Polyvinylpyrrolidon, Polyalkoxy, Poly(meth)acrylat, Sulfonsäure oder einem Salz davon, Sulfonsäureester, oder einer Kombination dieser Gruppen,

wobei für n=2 die einzelnen Reste B gleich oder unterschiedlich sein können.

**11.** Das Verfahren nach einem der vorstehenden Ansprüche, wobei die Zusammensetzungen $C_{HC-1}$ und $C_{R-LI-1}$ und, sofern die Schicht R-HI-1 aufgebracht wird, die Zusammensetzung $C_{R-HI-1}$ das hydrophile Polymer oder das hydrolysierbare hydrophile Organosilan oder ein Gemisch davon enthalten.

**12.** Ein mehrschichtiges optisches Element, herstellbar oder hergestellt nach dem Verfahren gemäß einem der Ansprüche 1-11.

**13.** Das Verfahren nach einem der vorstehenden Ansprüche, wobei in Schritt (ii) mehrere Zusammensetzungen $C_{R-LI-1}$ und $C_{R-HI-1}$ in alternierender Reihenfolge aufgebracht werden.

## Claims

**1.** A method for producing a multi-coat optical element, comprising:

(i) an application of a liquid composition $C_{HC-1}$ by spin coating or dip-spin coating to a substrate to form a hard coat HC-1 having a refractive index $n_{HC-1}$,
the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,

and a thermal treatment and/or UV treatment during and/or after the application of the liquid composition $C_{HC-1}$, to bring about crosslinking of the hydrolysable functional organosilane molecules;
(ii) after step (i) the application of at least one liquid composition $C_{R-LI-1}$ by spin coating or dip-spin coating to form at least one coat R-LI-1 which modifies the light reflection of the substrate and has a refractive index $n_{R-LI-1}$, with $n_{R-LI-1} < n_{HC-1}$,
the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,
- a particulate inorganic material which is selected from an inorganic oxide having porous or hollow particles, an oxyfluoride or a fluoride,

and a thermal treatment and/or UV treatment during and/or after the application of the liquid composition $C_{R-LI-1}$, to bring about crosslinking of the hydrolysable functional organosilane molecules;
(iii) after step (ii), the application of a liquid composition $C_{AF-1}$ by spin coating or dip-spin coating to form a hydrophilic anti-fog coating AF-1, the liquid composition $C_{AF-1}$ comprising at least one of the following hydrophilic components (a) and (b) or a mixture of these components (a) and (b):

(a) a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane, and also a hydrophilic polymer;
and/or
(b) a hydrolysable hydrophilic organosilane which has at least one organic radical bonded to the Si atom and having at least one hydrophilic group, and/or a product of hydrolysis and/or condensation of the hydrophilic organosilane;

(iv) after step (iii), a thermal treatment and/or UV treatment of the applied coats;

**characterized in that** the hydrophilic anti-fog coating AF-1 constitutes the outermost coat of the optical element.

2. The method according to Claim 1, wherein the liquid composition $C_{R\text{-}LI\text{-}1}$ from which the coat R-LI-1 is formed comprises a hydrophilic polymer or a hydrolysable hydrophilic organosilane or a mixture thereof.

3. The method according to Claim 1 or 2, wherein step (ii) further comprises the application of a liquid composition $C_{R\text{-}HI\text{-}1}$ by spin coating or dip-spin coating to form a coat R-HI-1 which modifies the light reflection and has a refractive index $n_{R\text{-}HI\text{-}1}$, with $n_{R\text{-}HI\text{-}1} > n_{HC\text{-}1} > n_{R\text{-}LI\text{-}1}$, the liquid composition $C_{R\text{-}HI\text{-}1}$ comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl and vinyl, and/or a product of hydrolysis and/or condensation of the functional organosilane,
- a particulate metal oxide which is selected preferably from $TiO_2$, $SnO_2$, $ZrO_2$, $Sb_2O_5$, $Sb_2O_3$, $SiO_2$ or mixtures or mixed oxides or core-shell structures thereof.

4. A method for producing a multi-coat optical element, comprising:

(i) an application of a liquid composition $C_{HC\text{-}1}$ by spin coating or dip-spin coating to a substrate to form a hard coat HC-1 having a refractive index $n_{HC\text{-}1}$,
the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,

and a thermal treatment and/or UV treatment during and/or after the application of the liquid composition $C_{HC\text{-}1}$, to bring about crosslinking of the hydrolysable functional organosilane molecules;
(ii) after step (i) the application of at least one liquid composition $C_{R\text{-}LI\text{-}1}$ by spin coating or dip-spin coating to form at least one coat R-LI-1 which modifies the light reflection and has a refractive index $n_{R\text{-}LI\text{-}1}$, with $n_{R\text{-}LI\text{-}1} < n_{HC\text{-}1}$, the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,
- a particulate inorganic material which is selected from an inorganic oxide having porous or hollow particles, an oxyfluoride or a fluoride; and
where the liquid composition $C_{R\text{-}LI\text{-}1}$ comprises a hydrophilic compound which is selected from a hydrophilic polymer, a hydrolysable hydrophilic organosilane or a mixture thereof; and
a thermal treatment and/or UV treatment during and/or after the application of the liquid composition $C_{R\text{-}LI\text{-}1}$, to bring about crosslinking of the hydrolysable functional organosilane molecules;

(iii) after step (ii) a thermal treatment and/or UV treatment of the applied coats;

**characterized in that** the outermost coat of the optical element is formed by the composition $C_{R\text{-}LI\text{-}1}$ and the outermost coat has an anti-fog effect.

5. A method for producing a multi-coat optical element, comprising:

(i) an application of a liquid composition $C_{HC\text{-}1}$ by spin coating or dip-spin coating to a substrate to form a hard coat HC-1 having a refractive index $n_{HC\text{-}1}$,
the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,

and a thermal treatment and/or UV treatment during and/or after the application of the liquid composition $C_{HC-1}$, to bring about crosslinking of the hydrolysable functional organosilane molecules;

(ii) after step (i) the application of at least one liquid composition $C_{R-LI-1}$ by spin coating or dip-spin coating to form at least one coat R-LI-1 which modifies the light reflection and has a refractive index $n_{R-LI-1}$, with $n_{R-LI-1} < n_{HC-1}$, the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,
- a particulate inorganic material which is selected from an inorganic oxide having porous or hollow particles, an oxyfluoride or a fluoride; and

the application of a liquid composition $C_{R-HI-1}$ by spin coating or dip-spin coating to form a coat R-HI-1 which modifies the light reflection and has a refractive index $n_{R-HI-1}$, with $n_{R-HI-1} > n_{HC-1} > n_{R-LI-1}$, the liquid composition $C_{R-HI-1}$ comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,
- a particulate metal oxide which is selected preferably from $TiO_2$, $SnO_2$, $ZrO_2$, $Sb_2O_5$, $Sb_2O_3$, $SiO_2$ or mixtures or mixed oxides or core-shell structures thereof,

where at least the liquid composition $C_{R-LI-1}$ comprises a hydrophilic compound which is selected from a hydrophilic polymer, a hydrolysable hydrophilic organosilane or a mixture thereof;

and

a thermal treatment and/or UV treatment during and/or after the application of the liquid composition $C_{R-LI-1}$ and the application of the liquid composition $C_{R-HI-1}$, to bring about crosslinking of the hydrolysable functional organosilane molecules;

(iii) after step (ii) a thermal treatment and/or UV treatment of the applied coats;

**characterized in that** the outermost coat of the optical element is formed by the composition $C_{R-LI-1}$ and the outermost coat has an anti-fog effect.

**6.** A method for producing a multi-coat optical element, comprising:

(i) an application of a liquid composition $C_{HC-1}$ by spin coating or dip-spin coating to a substrate to form a hard coat HC-1 having a refractive index $n_{HC-1}$,
the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,

and a thermal treatment and/or UV treatment during and/or after the application of the liquid composition $C_{HC-1}$, to bring about crosslinking of the hydrolysable functional organosilane molecules;

(ii) after step (i) the application of at least one liquid composition $C_{R-LI-1}$ by spin coating or dip-spin coating to form at least one coat R-LI-1 which modifies the light reflection and has a refractive index $n_{R-LI-1}$, with $n_{R-LI-1} < n_{HC-1}$, the liquid composition comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,
- a particulate inorganic material which is selected from an inorganic oxide having porous or hollow particles, an oxyfluoride or a fluoride; and

the application of a liquid composition $C_{R\text{-}HI\text{-}1}$ by spin coating or dip-spin coating to form a coat R-HI-1 which modifies the light reflection and has a refractive index $n_{R\text{-}HI\text{-}1}$, with $n_{R\text{-}HI\text{-}1} > n_{HC\text{-}1} > n_{R\text{-}LI\text{-}1}$, the liquid composition $C_{R\text{-}HI\text{-}1}$ comprising:

- a hydrolysable functional organosilane which has at least one organic radical bonded to the Si atom and having at least one functional group, the functional group being selected from epoxy, acryloyl, methacryloyl, acryloyloxy, methacryloyloxy, allyl or vinyl, and/or a product of hydrolysis and/or condensation of the functional organosilane,
- a particulate metal oxide which is selected preferably from $TiO_2$, $SnO_2$, $ZrO_2$, $Sb_2O_5$, $Sb_2O_3$, $SiO_2$ or mixtures or mixed oxides or core-shell structures thereof,

where at least the liquid composition $C_{R\text{-}HI\text{-}1}$ comprises a hydrophilic compound which is selected from a hydrophilic polymer, a hydrolysable hydrophilic organosilane or a mixture thereof; and
a thermal treatment and/or UV treatment during and/or after the application of the liquid composition $C_{R\text{-}LI\text{-}1}$ and the application of the liquid composition $C_{R\text{-}HI\text{-}1}$, to bring about crosslinking of the hydrolysable functional organosilane molecules;

(iii) after step (ii) a thermal treatment and/or UV treatment of the applied coats;

**characterized in that** the outermost coat of the optical element is formed by the composition $C_{R\text{-}HI\text{-}1}$ and the outermost coat has an anti-fog effect.

**7.** The method according to any of the preceding claims, wherein the hydrolysable functional organosilane has the following formula (I):

$$\mathbf{R^6R^7_{3-n}Si(OR^5)_n} \qquad \mathbf{(I)}$$

in which

- $R^5$ is an unsubstituted or substituted alkyl, acyl, alkyleneacyl, cycloalkyl, aryl or alkylenearyl group,
- $R^6$ is an organic radical which has at least one functional group, the functional group being selected from epoxy, acryloyl, methacryloyl, acryloyloxy, methacryloyloxy, allyl or vinyl,
- $R^7$ is an unsubstituted or substituted alkyl, cycloalkyl, aryl or alkylenearyl group,
- n is 2 or 3.

**8.** The method according to any of the preceding claims, wherein the liquid composition $C_{HC\text{-}1}$ comprises a particulate oxide, oxyfluoride and/or fluoride, an epoxy resin, a (meth)acrylic resin or a mixture thereof.

**9.** The method according to any of the preceding claims, wherein the hydrophilic polymer is selected from poly(N-isopropylacrylamide), polyacrylamide, poly(2-oxazoline), polyethylenimine, polyacrylic acid, polyacrylate, polymethacrylate, poly(ethylene glycol), poly(propylene glycol), polyvinyl alcohol, polyvinylpyrrolidone, polystyrenesulfonate, polyvinylsulfonic acid, polymers of maleic anhydride, polymethyl vinyl ether or mixtures thereof.

**10.** The method according to any of the preceding claims, wherein the hydrolysable hydrophilic organosilane has the following formula (IV):

$$\mathbf{R_oX_mSiB_n} \qquad \mathbf{(IV)}$$

where

m = 1-3, n = 1-2 and o = 0-1, with the proviso that m+n+o = 4,
the radical X is selected from halogen or $C_{1\text{-}4}$ alkoxy, where for m = 2-3 the individual radicals X may be identical or different,
the radical R is $C_{1\text{-}4}$ alkyl,
the radical B has the structure -B1-B2, in which B2 is a terminal hydrophilic group and -B1- constitutes either a spacer group, which connects the hydrophilic group B2 to the Si atom, or a covalent bond,
the terminal hydrophilic group -B2 being selected from polyvinylpyrrolidone, polyalkoxy, poly(meth)acrylate, sulfonic acid or a salt thereof, sulfonic esters, or a combination of these groups, and for n = 2 the individual

radicals B may be identical or different.

**11.** The method according to any of the preceding claims, wherein the compositions $C_{HC-1}$ and $C_{R-LI-1}$ and, if the coat R-HI-1 is applied, the composition $C_{R-HI-1}$ comprise the hydrophilic polymer or the hydrolysable hydrophilic organosilane or a mixture thereof.

**12.** A multi-coat optical element producible or produced by the method according to any of Claims 1-11.

**13.** The method according to any of the preceding claims, wherein multiple compositions $C_{R-LI-1}$ and $C_{R-HI-1}$ are applied in alternating sequence in step (ii).

**Revendications**

**1.** Procédé de fabrication d'un élément optique multicouche, ledit procédé comprenant les étapes suivantes :

(i) appliquer une composition liquide $C_{HC-1}$ par revêtement par centrifugation ou revêtement par centrifugation par immersion sur un substrat pour former une couche dure HC-1 ayant un indice de réfraction $n_{HC-1}$,
la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel, et

effectuer un traitement thermique et/ou un traitement UV pendant et/ou après l'application de la composition liquide $C_{HC-1}$ pour provoquer une réticulation des molécules d'organosilane fonctionnelles hydrolysables ;
(ii) après l'étape (i), appliquer au moins une composition liquide $C_{R-LI-1}$ par revêtement par centrifugation ou par revêtement par centrifugation par immersion pour former au moins une couche R-LI-1 modifiant la réflexion de la lumière du substrat et ayant un indice de réfraction $n_{R-LI-1}$, avec $n_{R-LI-1} < n_{HC-1}$,
la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,
- un matériau minéral particulaire qui est choisi parmi un oxyde minéral comportant des particules poreuses ou creuses, un oxyfluorure ou un fluorure,

et effectuer un traitement thermique et/ou un traitement UV pendant et/ou après l'application de la composition liquide $C_{R-LI-1}$ pour provoquer une réticulation des molécules d'organosilane fonctionnelles hydrolysables ;
(iii) après l'étape (ii), appliquer une composition liquide $C_{AF-1}$ par revêtement par centrifugation ou revêtement par centrifugation par immersion pour former un revêtement antibuée hydrophile AF-1, la composition liquide $C_{AF-1}$ comprenant l'un au moins des composants hydrophiles suivants (a) et (b) ou un mélange de ces composants (a) et (b) :

(a)un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel, ainsi qu'un polymère hydrophile ;
et/ou
(b)un organosilane hydrophile hydrolysable qui comporte au moins un radical organique lié à l'atome de Si et pourvu d'au moins un groupe hydrophile, et/ou un produit d'hydrolyse et/ou de condensation de l'organosilane hydrophile ;

(iv) après l'étape (iii), effectuer un traitement thermique et/ou un traitement UV des couches appliquées ; **caractérisé en ce que** le revêtement antibuée hydrophile AF-1 représente la couche la plus extérieure de l'élément

optique.

**2.** Procédé selon la revendication 1, la composition liquide $C_{R-LI-1}$, à partir de laquelle la couche R-LI-1 est formée, contenant un polymère hydrophile ou un organosilane hydrophile hydrolysable ou un mélange de ceux-ci.

**3.** Procédé selon la revendication 1 ou 2, à l'étape (ii) en outre l'application d'une composition liquide $C_{R-HI-1}$ étant effectuée par revêtement par centrifugation ou revêtement par centrifugation par immersion pour former une couche R-HI-1 modifiant la réflexion de la lumière et ayant un indice de réfraction $n_{R-HI-1}$, avec $n_{R-HI-1} > n_{HC-1} > n_{R-LI-1}$, la composition liquide $C_{R-HI-1}$ comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique et un groupe vinylique, et/ou un produit d'hydrolyse et/ou de condensation de l'organosilane fonctionnel,
- un oxyde métallique particulaire qui est de préférence choisi parmi $TiO_2$, $SnO_2$, $ZrO_2$, $Sb_2O_5$, $Sb_2O_3$, $SiO_2$ ou leurs mélanges ou oxydes mixtes ou leurs structures coeur-enveloppe.

**4.** Procédé de fabrication d'un élément optique multicouche, ledit procédé comprenant les étapes suivantes :

(i) appliquer une composition liquide $C_{HC-1}$ par revêtement par centrifugation ou revêtement par centrifugation par immersion sur un substrat pour former une couche dure HC-1 ayant un indice de réfraction $n_{HC-1}$, la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel, et

effectuer un traitement thermique et/ou un traitement UV pendant et/ou après l'application de la composition liquide $C_{HC-1}$ pour provoquer une réticulation des molécules d'organosilane fonctionnelles hydrolysables ;
(ii) après l'étape (i), appliquer au moins une composition liquide $C_{R-LI-1}$ par revêtement par centrifugation ou par revêtement par centrifugation par immersion pour former au moins une couche R-LI-1 modifiant la réflexion de la lumière du substrat et ayant un indice de réfraction $n_{R-LI-1}$, avec $n_{R-LI-1} < n_{HC-1}$, la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,
- un matériau minéral particulaire qui est choisi parmi un oxyde minéral comportant des particules poreuses ou creuses, un oxyfluorure ou un fluorure,

la composition liquide $C_{R-LI-1}$ contenant un composé hydrophile choisi parmi un polymère hydrophile, un organosilane hydrophile hydrolysable, ou un mélange de ceux-ci ; et
effectuer un traitement thermique et/ou un traitement UV pendant et/ou après l'application de la composition liquide $C_{R-LI-1}$ pour provoquer une réticulation des molécules d'organosilane fonctionnelles hydrolysables ;
(iii) après l'étape (ii), effectuer un traitement thermique et/ou un traitement UV des couches appliquées ; **caractérisé en ce que** la couche la plus extérieure de l'élément optique est formée par la composition $C_{R-LI-1}$ et la couche la plus extérieure a un effet antibuée.

**5.** Procédé de fabrication d'un élément optique multicouche, ledit procédé comprenant les étapes suivantes :

(i) appliquer une composition liquide $C_{HC-1}$ par revêtement par centrifugation ou revêtement par centrifugation par immersion sur un substrat pour former une couche dure HC-1 ayant un indice de réfraction $n_{HC-1}$, la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un

groupe acrylique, un groupe méthacrylique, un groupe acryloxy, un groupe méthacryloxy, un groupe arylique ou un groupe vinylique, et/ou un produit d'hydrolyse et/ou de condensation de l'organosilane fonctionnel, et

effectuer un traitement thermique et/ou un traitement UV pendant et/ou après l'application de la composition liquide $C_{HC-1}$ pour provoquer une réticulation des molécules d'organosilane fonctionnelles hydrolysables ;
(ii) après l'étape (i), appliquer au moins une composition liquide $C_{R-LI-1}$ par revêtement par centrifugation ou revêtement par centrifugation par immersion pour former au moins une couche R-LI-1 modifiant la réflexion de lumière et ayant un indice de réfraction $n_{R-LI-1}$, avec $n_{R-LI-1} < n_{HC-1}$, la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,
- un matériau minéral particulaire choisi parmi un oxyde minéral comportant des particules poreuses ou creuses, un oxyfluorure ou un fluorure ; et

appliquer une composition liquide $C_{R-HI-1}$ par revêtement par centrifugation ou revêtement par centrifugation par immersion pour former une couche R-HI-1 modifiant la réflexion de la lumière et ayant un indice de réfraction $n_{R-HI-1}$, avec $n_{R-HI-1} > n_{HC-1} > n_{R-LI-1}$ la composition liquide $C_{R-HI-1}$ comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,
- un oxyde métallique particulaire qui est de préférence choisi parmi $TiO_2$, $SnO_2$, $ZrO_2$, $Sb_2O_5$, $Sb_2O_3$, $SiO_2$ ou des mélanges ou des oxydes mixtes ou des structures coeur-enveloppe de ceux-ci,
au moins la composition liquide $C_{R-LI-1}$ contenant un composé hydrophile qui est choisi parmi un polymère hydrophile, un organosilane hydrophile hydrolysable ou un mélange de ceux-ci ;
et
effectuer un traitement thermique et/ou un traitement UV pendant et/ou après l'application de la composition liquide $C_{R-LI-1}$ et appliquer la composition liquide $C_{R-HI-1}$ pour provoquer une réticulation des molécules d'organosilane fonctionnelles hydrolysables ;

(iii) après l'étape (ii), effectuer un traitement thermique et/ou un traitement UV des couches appliquées ; **caractérisé en ce que** la couche la plus extérieure de l'élément optique est formée par la composition $C_{R-LI-1}$ et la couche la plus extérieure a un effet antibuée.

**6.** Procédé de fabrication d'un élément optique multicouche, ledit procédé comprenant les étapes suivantes :

(i) appliquer une composition liquide $C_{HC-1}$ par revêtement par centrifugation ou revêtement par centrifugation par immersion sur un substrat pour former une couche dure HC-1 ayant un indice de réfraction $n_{HC-1}$, la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,

et effectuer un traitement thermique et/ou un traitement UV pendant et/ou après l'application de la composition liquide $C_{HC-1}$ pour provoquer une réticulation des molécules d'organosilane fonctionnelles hydrolysables ;
(ii) après l'étape (i), appliquer au moins une composition liquide $C_{R-LI-1}$ par revêtement par centrifugation ou revêtement par centrifugation par immersion pour former au moins une couche R-LI-1 modifiant la réflexion de lumière et ayant un indice de réfraction $n_{R-LI-1}$, avec $n_{R-LI-1} < n_{R-HC-1}$, la composition liquide comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,

- un matériau minéral particulaire qui est choisi parmi un oxyde minéral comportant des particules poreuses ou creuses, un oxyfluorure ou un fluorure ; et

appliquer une composition liquide $C_{R\text{-}HI\text{-}1}$ par revêtement par centrifugation ou revêtement par centrifugation par immersion pour former une couche R-HI-1 modifiant la réflexion de la lumière et ayant un indice de réfraction $n_{R\text{-}HI\text{-}1}$, avec $n_{R\text{-}HI\text{-}1} > n_{HC\text{-}1} > n_{R\text{-}LI\text{-}1}$, la composition liquide $C_{R\text{-}HI\text{-}1}$ comprenant :

- un organosilane fonctionnel hydrolysable qui comporte au moins un radical organique lié à l'atome de Si et pourvu d'au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique, et/ou un produit d'hydrolyse et/ou de condensation de l'organosilane fonctionnel,
- un oxyde métallique particulaire qui est de préférence choisi parmi $TiO_2$, $SnO_2$, $ZrO_2$, $Sb_2O_5$, $Sb_2O_3$, $SiO_2$ ou des mélanges ou des oxydes mixtes ou des structures coeur-enveloppe de ceux-ci,

au moins la composition liquide $C_{R\text{-}HI\text{-}1}$ contenant un composé hydrophile choisi parmi un polymère hydrophile, un organosilane hydrophile hydrolysable ou un mélange de ceux-ci ;
et
effectuer un traitement thermique et/ou un traitement UV pendant et/ou après l'application de la composition liquide $C_{R\text{-}LI\text{-}1}$ et appliquer la composition liquide $C_{R\text{-}HI\text{-}1}$ pour provoquer une réticulation des molécules d'organosilane fonctionnelles hydrolysables ;

(iii) après l'étape (ii), effectuer un traitement thermique et/ou un traitement UV des couches appliquées ; **caractérisé en ce que** la couche la plus extérieure de l'élément optique est formée par la composition $C_{R\text{-}HI\text{-}1}$ et la couche la plus extérieure a un effet antibuée.

**7.** Procédé selon l'une des revendications précédentes, l'organosilane fonctionnel hydrolysable ayant la formule (I) suivante :

$$R^6R^7_{3-n}Si(OR^5)_n \qquad (I)$$

- $R^5$ étant un groupe alkyle, acyle, alkylène-acyle, cycloalkyle, aryle ou alkylène-aryle non substitué ou substitué,
- $R^6$ étant un radical organique qui comporte au moins un groupe fonctionnel, le groupe fonctionnel étant choisi parmi un groupe époxy, un groupe acrylique, un groupe méthacrylique, un groupe acryloxy, un groupe méthacryloxy, un groupe allylique ou un groupe vinylique,
- $R^7$ étant un groupe alkyle, cycloalkyle, aryle ou alkylène-aryle non substitué ou substitué,
- n étant 2 ou 3.

**8.** Procédé selon l'une des revendications précédentes, la composition liquide $C_{HC\text{-}1}$ contenant un oxyde, oxyfluorure et/ou fluorure particulaire, une résine époxy, une résine (méth)acrylique ou un mélange de ceux-ci .

**9.** Procédé selon l'une des revendications précédentes, le polymère hydrophile étant choisi parmi le poly(N-isopropylacrylamide), le polyacrylamide, le poly(2-oxazoline), le polyéthylèneimine, l'acide polyacrylique, le polyacrylate, le polyméthacrylate, le poly(éthylène glycol), le poly(propylène glycol), l'alcool polyvinylique, le polyvinylpyrrolidone, le sulfonate de polystyrène, l'acide polyvinylsulfonique, les polymères d'anhydride malique, l'éther polyméthylvinylique ou leurs mélanges.

**10.** Procédé selon l'une des revendications précédentes, l'organosilane hydrophile hydrolysable ayant la formule (IV) suivante :

$$R_oX_mSiB_n \qquad (IV)$$

m = 1 à 3, n = l à 2 et o = 0 à 1, à condition que m+n+o=4,
le radical X étant choisi parmi un halogène ou alcoxy en $C_1$ à $C_4$, avec m = 2 à 3
les radicaux X individuels pouvant être identiques ou différents,
le radical R étant un alkyle en $C_1$ à $C_4$,
le radical B ayant la structure -B1-B2 dans laquelle B2 est un groupe hydrophile terminal, et -B1- représente soit un groupe espaceur reliant le groupe hydrophile B2 à l'atome de Si, soit une liaison covalente,
le groupe hydrophile terminal -B2 étant choisi parmi une polyvinylpyrrolidone, un polyalcoxy, un poly(méth)acrylate, un acide sulfonique ou un sel de celui-ci, un ester d'acide sulfonique, ou une combinaison de

ces groupes, pour n = 2 les radicaux individuels B pouvant être identiques ou différents.

**11.** Procédé selon l'une des revendications précédentes, les compositions $C_{HC-1}$ et $C_{R-LI-1}$ et, si la couche R-HI-1 est appliquée, la composition $C_{R-HI-1}$ contenant le polymère hydrophile ou l'organosilane hydrophile hydrolysable ou un mélange de ceux-ci.

**12.** Élément optique multicouche qui est fabriqué ou peut être fabriqué par le procédé selon l'une des revendications 1 à 11.

**13.** Procédé selon l'une des revendications précédentes, à l'étape (ii) plusieurs compositions $C_{R-LI-1}$ et $C_{R-HI-1}$ étant appliquées en alternance.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20120019767 A1
- WO 2012013739 A
- WO 2012013740 A
- US 2009011255 A1